# EUROPEAN PATENT APPLICATION

(11) **EP 0 803 525 A2**
(43) Date of publication of application: **29.10.1997**
(21) Application number: 97200220.8
(22) Date of filing: 28.01.1997
(51) Int. Cl.: C08G 59/24, C08G 59/18, C08G 59/42, C09K 19/38

(54) **Chiral anisotropic thermosets (cat) in polymer stabilized liquid crystals**

(30) Priority: 05.02.1996 IT MI960201
(71) Applicant: Sniaricerche S.C.P.A., I-75010 Pisticci Scalo (IT)
(72) Inventor: Carfagna, Cosimo, 80126 Napoli (IT); Hakemi, Hassan-Ali, 20035 Lissone (MI) (IT)
(74) Representative: Smulders, Theodorus A.H.J., Ir.

(57) **Abstract**

The present invention relates to chiral anisotropic thermosetting resin comprising the reaction product of a liquid crystalline epoxy prepolymer and a chiral curing agent selected from the group consisting of chiral polyamines and chiral polycarboxylic acids. The invention is also directed to polymer dispersed liquid crystal composite containing a polymer continuous phase and a liquid crystal discontinuous phase characterized in that the polymer continuous phase contains a chiral anisotropic thermosetting resin comprising the reaction product of a liquid crystalline epoxy prepolymer and a chiral polycarboxylic acid curing agent as a compatible component of that phase. Methods of manufacturing the above polymer dispersed liquid crystal composites are also described.

## Description

### Field of the Invention

The present invention is directed to the synthesis of novel anisotropic thermosets which are particularly useful as matrix materials for the manufacture of polymer stabilized liquid crystal films and devices using these films. The instant invention is also directed to novel chiral anisotropic thermosetting resins produced by the reaction of liquid crystalline epoxy monomers and chiral curing agents. The invention is further directed to the use of chiral anisotropic thermosets (CAT) in the manufacture of both liquid crystal dispersed polymers (LCDP) and polymer dispersed liquid crystal (PDLC) devices. The new CATs are particularly useful in devices which utilize cholesteric liquid crystals because it is possible to increase the polymer content in the polymer/liquid crystal dispersions, and consequently increase the self-sustaining properties of the samples when manufacturing large flexible films. In the case of PDLC devices, the presence of an anisotropic cholesteric matrix reduces the haze because the refractive index of the droplets and the cholesteric matrix can be matched better. The instant invention also describes the synthesis of new CATs by reacting a liquid crystal epoxy monomer with a chiral curing agent, and their application in the technology of LCDP and PDLC.

### BACKGROUND OF THE INVENTION

Polymer dispersions are actually a very broad class of materials in which the weight concentration of polymer can be as large as 80% or as small as 2% depending upon the application and type of polymer materials used. In their traditional form, the concentration of polymer is near 50% and the liquid crystal is dispersed in the form of droplets within the polymer (J.W. Doane "Polymer dispersed liquid crystals: Boojums at work" MRS Bulletin vol. XVI, pp. 22-28, January 1991). In this case the liquid crystal is contained within closed cavities of the polymer; and no seals are required for display cells. The electrooptic response characteristics of the cell depend upon the nematic structure within the cavities, cavity sizes and the physical properties of the liquid crystal and polymer material. In the case of low polymer concentrations (1-5%) the polymer materials are of the gel type where fragile networks of cross-linked polymers create unusual electro-optic effects. For these gel dispersions, the liquid crystal material needs to be sealed within the display cell not only to prevent the material from leaking out but also to mechanically secure the display cell. Alignment layers on the cell substrates are normally also required. Gel dispersions are new aspects of the technology. They are particularly attractive because they offer a simple method for making haze-free light shutters which are desirable for direct-view displays.

Various forms of dispersions of liquid crystals in polymers (LCDP) have recently been studied in many fields because of their electro-optical properties. These polymer dispersions have some advantages with respect to liquid crystals devices, in fact they are self-sustained, also they allow the preparation of large homogeneous panels and work in the absenc of a polarizer, which substantially reduces light transmission. However, in these materials the polymers are usually isotropic and, consequently, they exhibit haze when viewed at wide angles.

In some recent work, applicants used side chain liquid crystal polymers as the matrix in LCDP to reduce the haze phenomenon but the method exhibits some problems due to the high solubility of the low molecular weight liquid crystal in the side chain liquid crystal polymer which limits the phase separation process, and also due to the necessity to align the polymer with an electric or magnetic field which makes it difficult to scale-up the process. (R.A.M. Hikmet Liquid Crystals, 1991, vol. 9, No. 3, 495-416).

Another problem of these materials is that they are transparent only in the field-ON state, limiting the areas of application for safety reasons. Some new electro-optical materials, that exhibit "dual modality" behavior have been described in the literature (Kikuchi et al., Polymer for Advanc. Technol., Int. Display Conference 1991). These materials contain a small percentage (1-5%) of a side chain liquid crystal polymer dispersed in a cholesteric liquid crystal. It is well known that cholesteric materials can exhibit a "dual modality" behavior due to their helical structure. When an electrical field is applied to a sample, the helical axes of the cholesteric liquid crystal are randomly oriented in a focal conic texture and the sample becomes scattering. At higher voltage the liquid crystal is totally oriented and the sample appears transparent. The role of the polymer in these materials is to stabilize the optical states of the samples. The percentage of the polymer in the samples described in the literature is less than 5% because higher polymer content would destroy the "dual modality" behavior. When the polymer concentration is so low, the samples do not have the self-sustaining properties that make them useful for large flexible panels.

By increasing the amount of matrix up to 60-80%, the continuous phase consists of the binder and the inclusion is formed by the microdroplets of low mass liquid crystals. In this case it is much more accurate to define these devices as PDLC. These kinds of dispersions are currently the best available and their operations are better understood. One of the most criticized aspect of these devices is the haze (angular dependence transmission). The challenge for this technology is to develop dispersions which exhibit high contrast at all viewing angles. This can be done by designing materials which are haze-free at all viewing angles in the transparent state and opaque or translucent for all viewing angles in the scattering state. One approach has been to use polymer liquid crystals in place of normal isotropic polymers so that the birefringent liquid crystal droplets reside in a polymer matrix which is also birefringent. If both the ordinary and extraordinary refractive indices of the polymer and droplets are matched, then haze-free operation can be achieved. While this effect has been demonstrated, the development of these materials is still problematic, especially in finding polymer liquid crystals which have suitable refractive indices and which phase separate from the low-molecular weight liquid crystals to form droplets.

Composites of liquid crystals dispersed in a polymer matrix, such as polymer-dispersed liquid crystal (PDLC) and nematic curvilinearly aligned phase (NCAP) devices, generally comprise droplets of a biaxially birefringent, nematic liquid crystal material dispersed in a transparent polymeric matrix. Such devices are of interest because they can be electrically controlled or switched between relatively translucent (i.e. light scattering or nearly opaque) and relatively transparent (i.e. light transmitting) states. This occurs because the liquid crystal droplets exhibit birefringence, i.e. optical anisotropy. All liquid crystals have two indices of refraction: an extraordinary index of refraction measured along the long axis of the rigid rodlike liquid crystals, and a smaller ordinary index of refraction measured in a plane perpendicular to the long axis. As a result, the droplets strongly scatter light when they are randomly oriented in the matrix and the devices appear translucent (or nearly opaque). On the application of either an electric field or a magnetic field, however, the long axes of the liquid crystal droplets become aligned along the direction of the electric/magnetic field vector and more directly transmit light.

If the refractive indices of the liquid crystal material and the polymer matrix are closely matched while in the field-induced, aligned state, the devices appear transparent. Thus, upon the application of an electric or magnetic field, for example, the device switches from a state in which it appears translucent (nearly opaque) to a state in which it appears transparent. Upon removal of the electrical or magnetic field, the device reverts to a translucent (opaque) state.

Devices containing composites of liquid crystals dispersed in a polymer matrix have found use as light valves, filters, shutters, information displays, architectural glass and windows, among others.

The compositing of liquid crystals in a polymer matrix is well known in the art. An early development in the use of such composites is described by Elliot in French Patent 2,139,537. Elliot used polymers as binders for liquid crystals by emulsifying the liquid crystals in a polymer and casting the composite into films. French Patent 2,139,537 states, "it is advantageous to select a liquid crystal substance which has a refractive index similar to that of the film substrate and the binder, to avoid undesirable light diffusion effects from the emulsion film". He noted that "most organic compounds of this type have a similar refractive index to that of numerous substances among the polymers which could be used for the film or for the binder (i.e. about 1.5)". That technology was adopted by Fergason and called nematic curvilinearly aligned phases ("NCAP") liquid crystal by Fergason (see Fergason, et al., U.S. Patent No. 4,789,858).

Another process for making composites of liquid crystals in polymers is called polymer dispersed liquid crystals (PDLC). It involves a number of phase separation processes for making uniform liquid crystal droplets in a polymer binder. Such phase separation processes include: [1] Polymerization-Induced Phase Separation (PIPS). In polymerization-induced phase separation, liquid crystal microdroplets form spontaneously in a polymer matrix upon the separation of the liquid crystal and matrix phases. Phase separation is induced by causing the uncured matrix material to polymerize. Phase separation by polymerization is useful when prepolymer materials are miscible with low molecular weight liquid crystal compounds. A homogeneous solution is made by mixing the prepolymer with the liquid crystal. Polymerization is achieved through a condensation reaction, as with epoxy resins, through free radical polymerization, as with a vinyl monomer catalyzed with a free radical initiator such as a benzoylperoxide, or through a photoinitiated polymerization. The solubility of the liquid crystal decreases in the growing polymers until the liquid crystal phase separates, forming droplets. The droplets isolate from each other and form a discontinuous phase within the polymer phase. The polymer phase is a continuous phase. The droplets grow until gelating of the polymer locks in the droplet morphology. According to *Doane et al.,* "Polymer Dispersed Liquid Crystals for Display Application," Mol. Cryst. Liq. Cryst., 1988, Vol. 165, pp. 511-532, 512, droplet size and morphology are determined during the time between droplet nucleation and gelating of the polymer. Size is controlled by the rate of polymerization, the relative concentrations of materials, the types of liquid crystal and polymers used, and by such physical parameters as viscosity, rate of diffusion, and solubility of the liquid crystal in the polymer. The rate of polymerization is controlled by cure temperature for thermally cured polymers or by light intensity for photochemical polymerization. During the phase separation, a portion of the liquid crystal is retained in the polymeric continuous phase and acts as a plasticizer of the polymer.

[2] Phase Separation By Thermal Processes (TIPS). This process is useful for thermoplastics which melt below their decomposition temperature. A binary mixture of polymer and liquid crystal forms a solution at elevated temperature. Cooling the solution causes phase separation. The droplet size of the occluded material is governed by the rate of cooling and depends upon a number of material parameters, which include viscosity, chemical potentials, etc. As with the previous process, the liquid crystal droplets form a discontinuous phase and the polymer, the thermoplastic, forms a continuous phase. Also, some of the liquid crystal dissolves in the polymer and acts as a plasticizer.

[3] Phase Separation By Solvent Evaporation (SIPS). This process is useful with thermoplastics which melt above the decomposition temperature of the thermoplastic or the liquid crystal, or where solvent coating techniques are used. The liquid crystal and polymer are dissolved in a common solvent forming a solution. The solvent is then removed by evaporation, resulting in phase separation and polymer solidification. In this case as with the others, the liquid crystal droplets form a discontinuous phase and the polymer forms a continuous phase.

Phase separation techniques are described by Taylor, U.S. Patent No. 3,935,337, who discloses the preparation of a liquid-crystal containing structure by incorporating a liquid crystal substance into a polymeric matrix so as to form a thin, layer-like structure of controlled thickness. Taylor states that the liquid crystal substance may be incorporated into the polymeric matrix by mixing liquid crystals with a polymerizable monomer or prepolymer followed by polymerization, using a polymer (or polymerizable monomer) as the medium (solvent) in which liquid crystal synthesis is carried out. In the latter, the monomer medium, if it is a solvent, would, of course, be expected to dissolve the liquid crystal. Taylor's approaches include dissolving or dispersing the liquid crystal forming material in a polymer solution or molten polymer, then fabricating the polymer by a suitable technique (solution casting, molding, extrusion, etc.). Following solvent evaporation and/or cooling of molten polymer, the polymer acts as a binder and protective matrix for the liquid crystals.

Taylor includes a method of incorporation of liquid crystals into polymer matrices that involves the preparation of a mixture of the liquid crystal and polymerizable monomer or prepolymer, followed by polymerization. This technique permits "embedment" of liquid crystals in matrices of thermosetting plastics, including phenol-formaldehyde resins; urea-formaldehyde resins; melamine-formaldehyde resins; epoxy resins; polyurethanes; unsaturated polyesters; and thermosetting acrylic resins.

Refinements to this technology are set forth in U.S. Patents Nos. 4,671,618; 4,673,255; 4,685,771; 4,688,900; 4,890,902; 4,994,204; 5,004,323; 5,087,387; 5,093,471; and 5,093,735.

The prime function of these technologies is to create a matrix system in which the liquid crystals are discretely and uniformly dispersed and where the matrix does not interfere with the function of the liquid crystals. In each of the above procedures, the structural relationship of the liquid crystal droplets to the polymer is, in essential respects, the same.

Polymers used in making PDLC composites are from two categories, thermosetting polymers and thermoplastic polymers. The polymers used in the present invention are primarily the thermosetting polymers. The thermosetting polymers undergo a cure reaction where they are transformed from a lower molecular weight composition with heat, with or without catalyst, hardeners, modifiers, and the like, into a higher molecular weight cured thermoset resin. Thermosetting is the act of using heat to transform the lower molecular weight precursor to the cured product. The temperature needed to accomplish this is dependent upon the time given to the reaction, catalysts employed, the relative reactivities of the complementary functional groups in the precursor, i.e., the general and common knowledge of those skilled in the thermosetting resin art. The thermosetting resin may be any of those known in the art.

Thermosetting epoxy matrix resins curing at temperature from about 250°F. (121°C.) to about 350°F. (177°C.), or higher, are suitable for use in PDLC composites and are the most common matrix resins, but matrices of bismaleimide (BMI), phenolic, polyester, PMR-15 polyimide and acetylene terminated resins, typical of high performance thermosetting resins, are usable in PDLC devices. Other thermosetting resins such as thermosetting resins from acrylics, polyurethanes, free-radically induced thermosetting resin, and the like, are usable in making PDLC composites. The typical thermosetting resin is an A-stage resin. In some cases, it may be desirable to utilize a B-stage resin but in the typical case, such is done in combination with an A-stage resin. Such B-stage resin will affect the viscosity of the resin formulation.

Epoxy resins are probably the most studied, and are a particularly preferred material, in making PDLC compositions. They are convenient to use for several reasons. It is easy to mix epoxy resins having different refractive indices to produce a binder with a refractive index precisely matched with the extraordinary refractive index of the liquid crystal.

There are a variety of epoxy resins suitable for use in making PDLC composites. All epoxy resins start with an epoxy precursor that is capable of homopolymerization reaction that is catalytically initiated, or coreacted with complementary functional compositions such as compounds with active hydrogen groups or other reactive groups capable of reacting with an epoxy resin so as to cause the molecular weight of the epoxy resin to increase. The performance of the cured epoxy resin is dependent upon the degree of functionality of the resin and the coreactant, the degree of aromaticity of the resin, the molecular weight of the epoxy resin and any coreactant prior to reaction, and the level of cure of the resin. The coreactant can be a curing agent and/or hardener.

Conventional thermoset, including epoxy-based thermoset, polymer dispersed liquid crystal composites present certain performance problems related to the polymer matrix such as weaker mechanical properties such as high brittleness and low heat resistance, low electrical resistivity, slow curing times and a low stability range with respect to electrooptical properties.

A further problem with conventional polymer dispersed liquid crystal composite devices is "haze", more accurately termed the "angular dependence of light transmission." The phenomenon of "haze" is due to the perceived mismatch between the extraordinary refractive index of the liquid crystal microdroplets and the refractive index of the matrix when the viewing direction is different from the orthogonal.

An effort has been made in the art to overcome the problem of the angular dependence of light transmission. This effort involved the utilization of a birefringent liquid crystalline side-chain polymer in the polymer matrix instead of the conventional isotropic matrix (see Doane, U.S. Patent No. 4,944,204). The goal was to produce, in a PDLC device, a birefringent, optically anisotropic matrix wherein the ordinary and extraordinary indices of refraction are matched for the polymer matrix material and the dispersed liquid crystal microdroplets. The cross-linked liquid crystal thermoset disclosed in U.S. Patent No. 4,944,204 is based upon a mixture of a commercially available epoxy resin and a mesogenic single amine curing agent. The resultant thermoset is that of a side-chain cross-linked polymer and is not a main-chain or comb-like thermoset. A problem associated with the approach embodied in U.S. Patent No. 4,994,204 relates to utilization of a curing agent containing a single amine. The use of such a curing agent markedly reduces the extent of cross-linking, which in turn reduces the glass transition temperature and mechanical performance of the resin, with the consequence that the solubility of liquid crystal microdroplets in the matrix after curing is increased. This is a significant disadvantage because of the critical importance of effecting and maintaining complete phase separation in polymer dispersed liquid crystal composites.

It would therefore be desirable to provide a component to the polymer matrix which would improve the mechanical and electrooptical performance properties of the polymer dispersed liquid crystal composite. The desired component would be compatible with the polymer matrix, would improve mechanical and electrooptical properties of the composite, and would, in at least some embodiments, reduce the angular dependence of light transmission but would not compromise the degree of phase separation between the polymer continuous and liquid crystal discontinuous phases of the composite.

Liquid crystalline thermosettable epoxy resins (LCERs) are well known in the art but have heretofore never been made by reacting with a chiral curing agent nor applied to the technology of polymer dispersed liquid crystal composites as main chain components of the thermoset in the polymer continuous phase matrix. The LCERs are known to exhibit enhanced thermal and mechanical properties, and have been shown to enhance tensile and flexural strength/modulus compared with conventional epoxy resin. See Hefner, Jr. et al., U.S. Patent No. 4,962,163.

LCERs may be obtained by endcapping mesogenic or rigid-rod molecules with reactive epoxy groups in the presence of a suitable curing agent, typically a diamine. It is known that a mesogenic molecular arrangement is sustained over the cross-linking reaction when the reaction is performed in the thermal stability range of the liquid crystalline phase. See Carfagna et al., Liq. Cryst., 13(4), pp. 571-584 (1993). It is further known that the selection of both the glycidyl terminated component and the curing agent is important to achieve an ordered thermoset and that it is not essential that the epoxy monomer and the curing agent form a nematic phase by themselves.

Because of the problems mentioned above, it would therefore be desirable to provide polymer dispersed liquid crystals which utilize a chiral anisotropic thermosetting resin. In the present invention, applicants have also found a way to reduce the angular dependence of light transmission. In achieving the results of the present invention it would be desirable not to compromise the degree of phase separation between the polymer continuous and liquid crystal discontinuous phases of the composite. The prior art is silent regarding the use of chiral anisotropic thermosetting resins in the manufacture of PDLC and LCDP.

### OBJECTS OF THE INVENTION

It is an object of the present invention to provide a polymer dispersed liquid crystal composite having as a compatible component of the polymer matrix thereof a chiral anisotropic thermosetting resin.

It is an object of the present invention to provide a polymer dispersed liquid crystal composite having as a compatible component of the polymer matrix thereof a liquid crystalline main chain epoxy resin prepared by reacting a liquid crystalline epoxy resin monomer with a chiral polycarboxylic acid.

It is another object of the present invention to provide a liquid crystalline main chain epoxy resin which is cured with a chiral polycarboxylic acid in the polymer continuous phase of a polymer dispersed liquid crystal composite in sufficient quantity to improve the electrooptical and mechanical properties of the composite.

It is still another object of the invention to provide a liquid crystalline main chain epoxy resin cured with a chiral cross-linking agent in the polymer continuous phase of a polymer dispersed liquid crystal composite in sufficient quantity to improve the electrooptical and mechanical properties of the composite and to create a polymer continuous phase that is anisotropic with respect to the transmission of light.

It is a further object of the invention to provide a method of making a polymer dispersed liquid crystal composite having as a compatible component of the polymer matrix thereof a liquid crystalline main chain epoxy resin which is cured with a chiral polycarboxylic acid.

It is a still further object of the invention to provide an electrooptical device containing a polymer dispersed liquid crystal composite having as a compatible component of the polymer matrix thereof a chiral anisotropic thermosetting resin prepared by reacting a liquid crystalline epoxy resin with a chiral polycarboxylic acid.

Yet it is still another object of the present invention to provide chiral anisotropic resins comprising the reaction product of a liquid crystalline epoxy resin and a chiral difunctional curing agent.

Moreover, it is a further object of the present invention to provide novel chiral polycarboxylic acid curing agents suitable for crosslinking liquid crystalline epoxy resins.

Additionally, another object of this invention is to provide polymer stabilized liquid crystals (PSLC) by dispersing a chiral anisotropic thermosetting polymer network in a continuous cholesteric liquid crystal matrix.

A still further objective of this invention is to provide a dual mode liquid crystal film technology that consists of dispersions of a chiral anisotropic thermosetting polymer network in a continuous cholesteric liquid crystal matrix.

These and other objects and advantages of the present invention will become more apparent as the following description proceeds.

To the accomplishment of the foregoing and related ends, the invention, then, comprises the features hereinafter fully described in the specification and particularly pointed out in the claims, the following description and the annexed drawings setting forth in detail certain illustrative embodiments of the invention, this being indicative, however, of several of the various ways in which the principles of the invention may be employed.

### SUMMARY OF THE INVENTION

The present invention is directed to a chiral anisotropic thermosetting resin comprising the reaction product of a liquid crystalline epoxy prepolymer and a chiral curing agent.

The instant invention is also directed to polymer dispersed liquid crystal composites containing a polymer continuous phase and a liquid crystal discontinuous phase characterized in that the polymer continuous phase contains a chiral anisotropic thermosetting resin comprising the reaction product of a liquid crystalline epoxy prepolymer and a chiral curing agent as a compatible component of that phase.

The composites of the present invention may contain 1 to 99% by weight based on the total weight of the composite of a polymer continuous phase which comprises a chiral anisotropic thermosetting resin which is the reaction product of a liquid crystalline epoxy prepolymer and a chiral polycarboxylic acid. The liquid crystal discontinuous phase typically comprises 99 to 1% by weight based on the total weight of the composite.

The present invention is also directed to a chiral anisotropic thermosetting resin comprising the reaction product of a liquid crystalline epoxy prepolymer and a chiral polycarboxylic acid curing agent.

The instant invention is also directed to a polymer dispersed liquid crystal composite containing a polymer continuous phase and a liquid crystal discontinuous phase characterized in that the polymer continuous phase contains a chiral anisotropic thermosetting resin comprising the reaction product of a liquid crystalline epoxy prepolymer and a chiral polycarboxylic acid curing agent as a compatible component of that phase.

The invention further relates to a method of making a polymer dispersed liquid crystal composite. The method involves the steps of preparing a mixture containing (a) a liquid crystalline epoxy resin prepolymer containing a rigid rodlike moiety, (b) a low molecular weight liquid crystal material, and (c) a chiral polycarboxylic acid curing agent, wherein (a), (b), and (c) are miscible. The method further involves the step of curing the mixture to form a polymer continuous phase and a liquid crystal discontinuous phase wherein the liquid crystalline epoxy prepolymer containing the rigid rodlike moiety is a main chain component of the polymer continuous phase.

The instant invention is also directed to a haze-free polymer stabilized liquid crystal composite comprising 70 to 95% by weight of a liquid crystal continuous phase and 5 to 30% of a chiral anisotropic thermosetting polymer discontinuous phase. The composite may be in the form of a film.

### BRIEF DESCRIPTION OF THE FIGURES

Figure 1 shows the morphology of the samples prepared following the procedure of Example 2.

Figure 2 describes the electrooptical properties of the samples prepared according to the procedure of Example 2.

Figure 3 illustrates the angular transmittance of the samples of Example 2.

### DETAILED DESCRIPTION OF THE PREFERRED EMBODIMENTS

The invention contemplates chiral anisotropic thermosetting resins which are the reaction product of a liquid crystalline epoxy prepolymer and a chiral polyfunctional material such as a chiral diamine or a chiral polycarboxylic acid. The novel chiral anisotropic thermosetting resins are prepared by reacting at elevated temperature and under continuous agitation a liquid crystalline epoxy prepolymer with the polyfunctional chiral curing agent. Small amounts of an additional monoepoxy monomer such as glycidylmethacrylate or acrylate may be added during the preparation of the chiral anisotropic thermosetting resins. The liquid crystalline epoxy prepolymer should have an epoxy equivalent in the range of 100-200 and the preferred temperatures for their preparation are in the range of 90° to 180°C. The preferred liquid crystalline epoxy prepolymer is typically selected from the group consisting of: 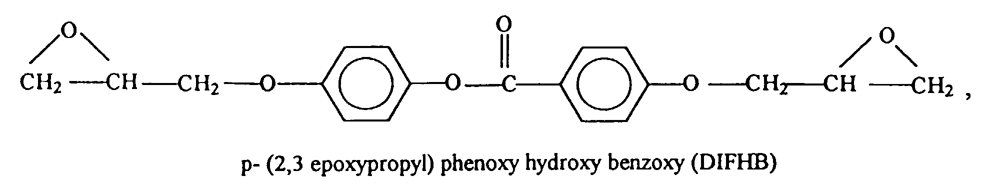 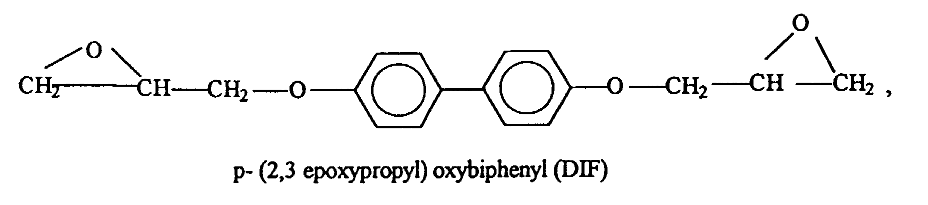 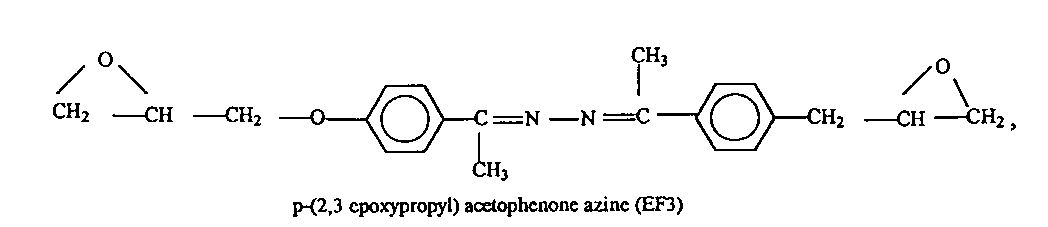 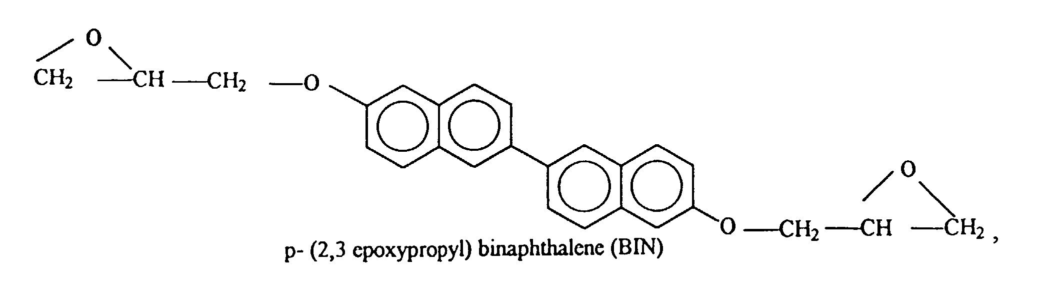 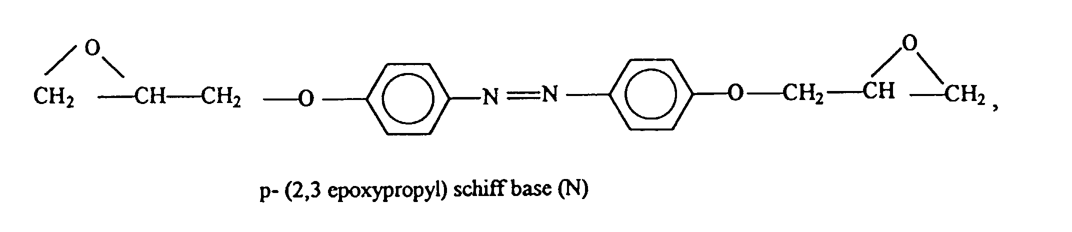 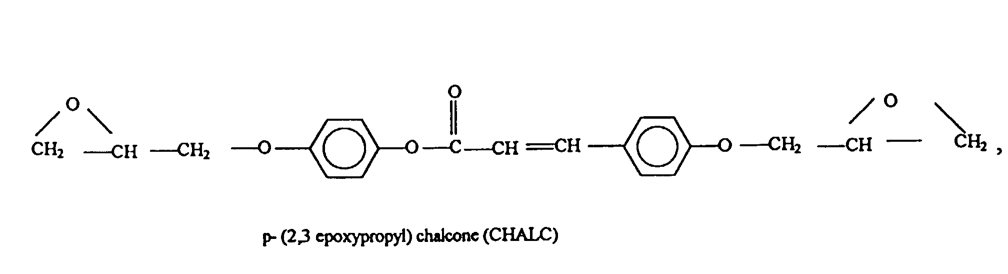 and 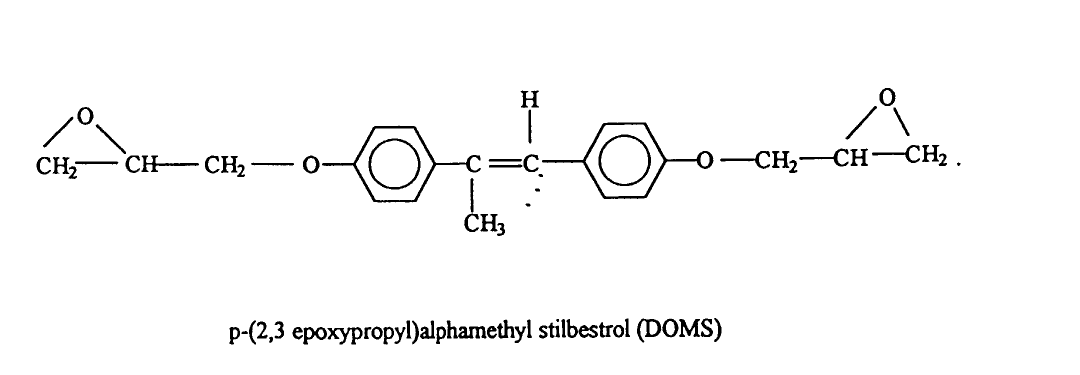 Other liquid crystalline epoxy prepolymers which can be used in the practice of the present invention include prepolymers of the formula 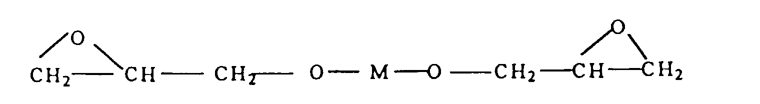 wherein M is a group containing two or more aromatic rings bridged by a rigid central linkage group and said central linkage group is selected from the group consisting of a direct bond, or a -CR₁=CR₁-, -C=C-, -N=N-, CR₁=N, -CR₁=N-N=CR₁-, -CR₁=CR₁-CO-, -O-CO-NR-CO-,-N=CR₁-, -CO-O-CO-NR, -CO-CR₁=CR₁-, -CO-O-N=CR₁, CR₁ =N-O-OC-, -CO-NR₁-NR₁-OC-, -CH =CH-O-OC-,-CO-O-CH=CH-, -O-OC-CH=CH-, -CH=CH-CO-O-, CHR₁O-CO-CH=CH-, -CH=CH-CO-O-CHR₁, -CHR₁-CO-O-CH=CH-, -CH=CH-O-CO-CHR₁-, -CO-S-,-S-OC-, -CH₂-CH₂-O-O-, -O-OC-CH₂-CH₂-, -C=C-C=C-,-CR₁=CR₁-CR₁=CR-, 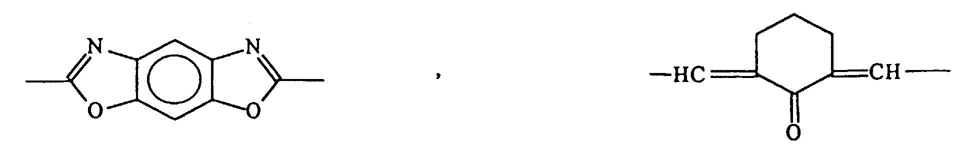 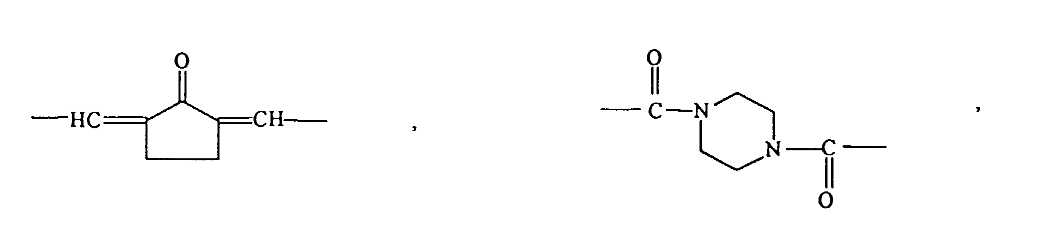 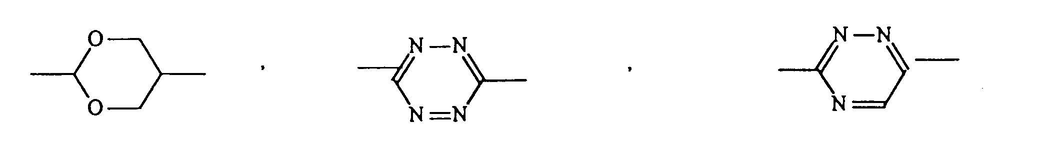 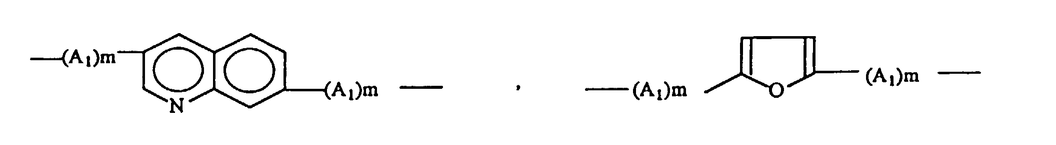 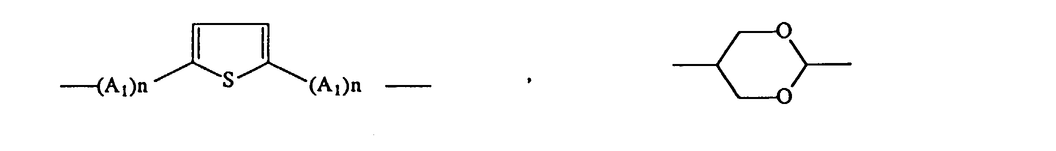 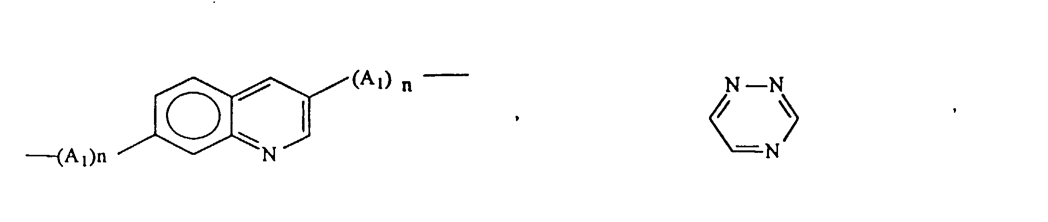 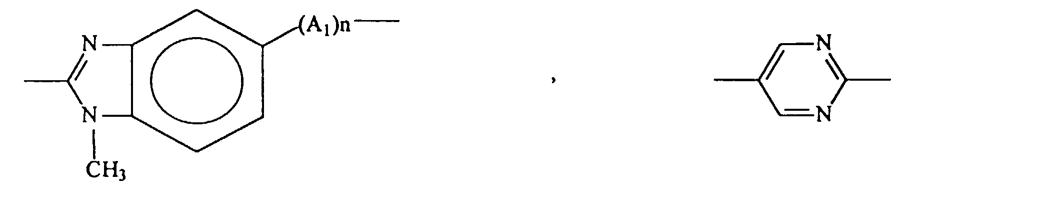 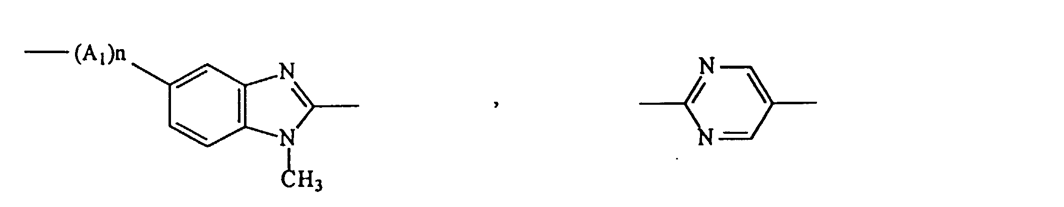 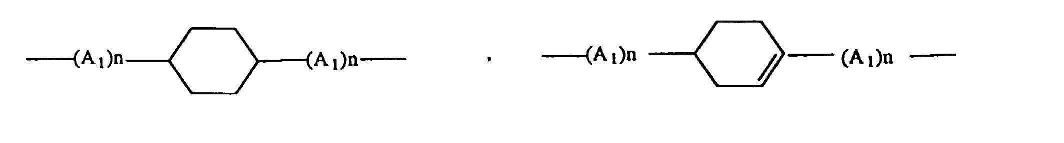 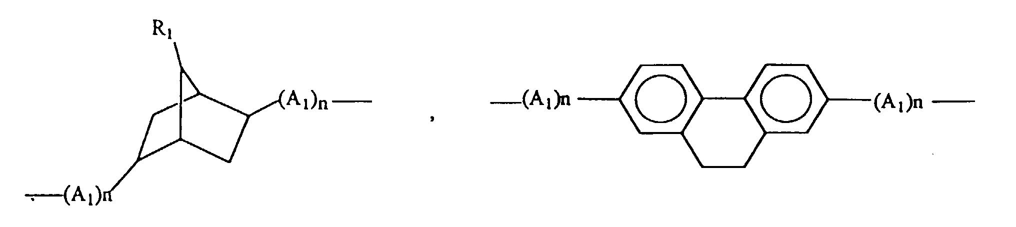 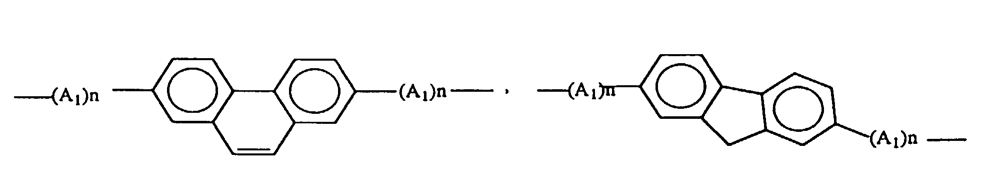 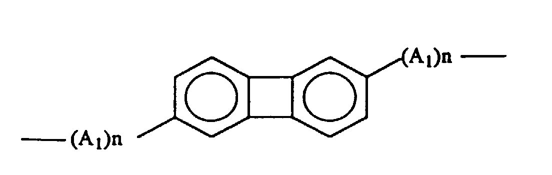 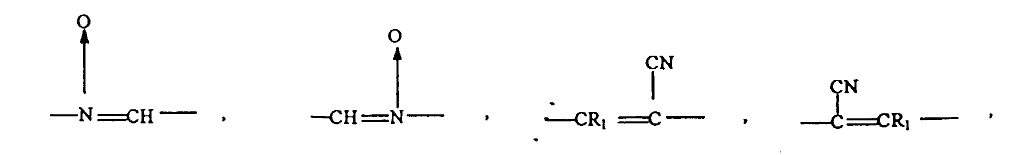 or 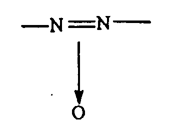 wherein each A₁ is independently a 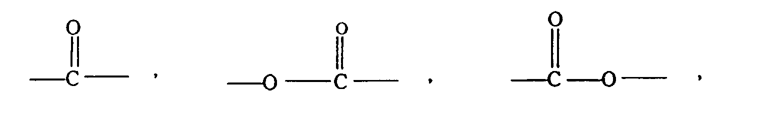 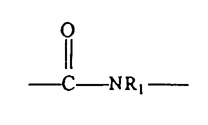 or 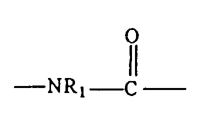 group ; each R₁ is independently hydrogen or a hydrocarbyl group having 1-3 carbon atoms and the aromatic rings can also contain one or more heteroatoms selected from the group consisting of N, O, S.

The polyfunctional chiral curing agent is typically selected from the group consisting of chiral polyamines and chiral polycarboxylic acids. The preferred chiral curing agents are polycarboxylic acids corresponding to the formulas 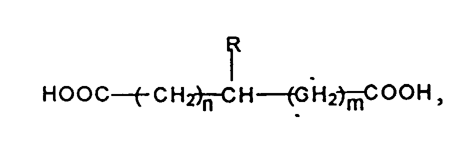 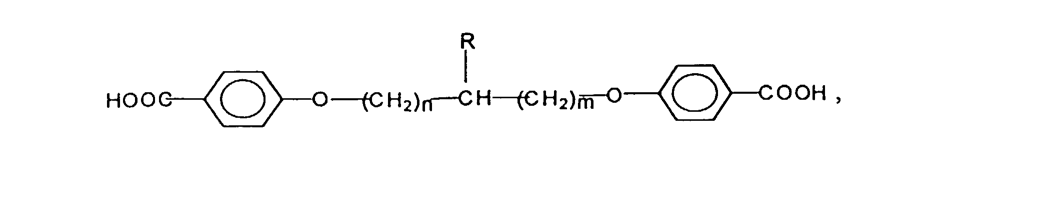 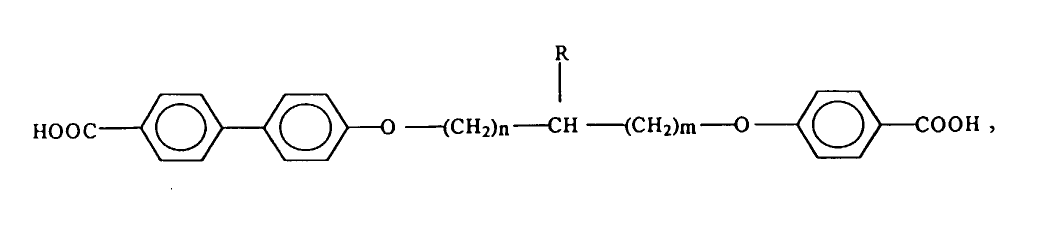 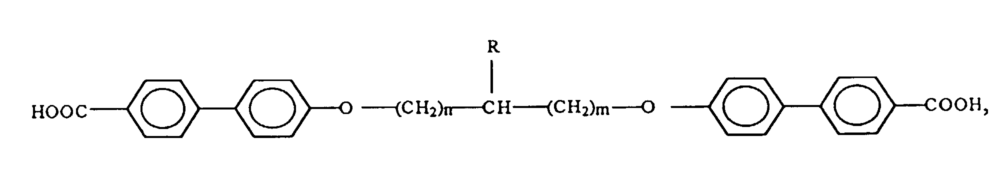 and 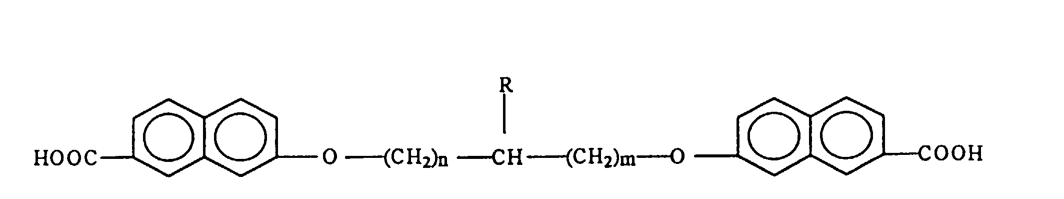 wherein R is selected from the group consisting of CH₃, C₂H₅, n-C₃H₇, i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n can not be identical.

The preferred chiral polycarboxylic curing agents correspond to the formula 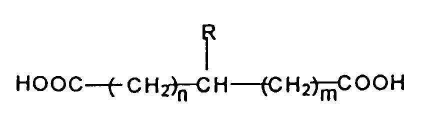 wherein R is selected from the group consisting of CH₃, C₂H₅, n-C₃H₇, i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n can not be identical. Typical chiral curing agents corresponding to the above formula include 3-methyl adipic acid, 2-methyl adipic acid, 3-ethyl adipic acid, 2-ethyl adipic acids, 2-methyl succinic acid, and 2-methyl pentanedicarboxylic acid.

The invention further contemplates composites of a liquid crystal discontinuous phase in a polymer matrix continuous phase, where the polymer matrix continuous phase thereof contains as a compatible component of that phase a chiral anisotropic thermosettable liquid crystalline main chain epoxy resin (LCER) The invention further contemplates that the LCER may comprise between 0 - 100% of the chiral anisotropic thermosettable epoxy resin in the polymer continuous phase. Where the LCER does not comprise 100% of the polymer discontinuous phase, other compatible non-mesogenic epoxy resins may be utilized.

The composites of the present invention may contain 1 to 99% by weight based on the total weight of the composite of a polymer continuous phase which comprises a chiral anisotropic thermosetting resin which is the reaction product of a liquid crystalline epoxy prepolymer and a chiral polycarboxylic acid. The liquid crystal discontinuous phase typically comprises 99 to 1% by weight based on the total weight of the composite.

In the practice of the invention, the chiral thermoset polymer matrix continuous phase is anisotropic (different indices of refraction for different directions of incident light) with respect to the transmission of light. The matrix of the composite becomes anisotropic upon the appearance of a mesophase (liquid crystalline phase) in the thermoset. The appearance of a mesophase depends on the LCER used in the composite, the concentration of the LCER with respect to the total resin in the composite, the chiral curing agent used, and the curing temperature. The case of an anisotropioc matrix, and the parameters which influence whether a mesophase appears, are all illustrated in the examples that follow. As is shown in the examples below, the electrooptical and mechanical properties of the composites of the invention are improved by the presence of the LCER in the case of an anisotropic matrix. Improvements in composites containing a anisotropic matrix are also obtained.

The composites of the present invention may be prepared in accordance with standard methods known in the art for making polymer dispersed liquid crystal composites.

The preferred method of preparation is polymerization-induced phase separation (PIPS).

Under the PIPS method, the components of the mixture - the epoxy resin, curing agent, and liquid crystal material - are mixed thoroughly. Thorough mixing is important for uniform results. The mix is then degassed, such as by centrifugation. This usually takes several minutes.

In another preferred embodiment of the present invention, applicant has discovered a dual mode and haze-free liquid crystal film technology that consists of dispersions of a chiral anisotropic thermosetting polymer network in a continuous cholesteric or nematic liquid crystal matrix. A particularly preferred composite is a haze-free polymer stabilized liquid crystal composite comprising 70 to 95% by weight of a liquid crystal continuous phase and 5 to 30% of a chiral anisotropic thermosetting polymer discontinuous phase. The preferred chiral anisotropic thermosetting polymers are those obtained by reacting a liquid crystalline epoxy prepolymer with a chiral polycarboxylic curing agent.

The invention further relates to a method for making a polymer stabilized liquid crystal composite. The method involves the step of preparing a mixture containing (a) a liquid crystalline epoxy resin prepolymer, (b) a low molecular weight liquid crystal material, and (c) a chiral curing agent, wherein (a), (b) and (c) are miscible. The method further involves the step of curing the mixture to form a liquid crystal continuous phase and a chiral anisotropic polymer discontinuous phase.

By the above method a new type of electro-optical films were prepared by dispersing some liquid crystal epoxy resins (LCERs) at low concentration in a cholesteric liquid crystal. These films can work as a reverse mode shutter, which is transparent in the field-OFF state and opaque in the field-ON state, and as a normal mode shutter, which is opaque in the field-OFF state (at low voltages in this case) and transparent in the field-ON state. The transparent state is haze-free for all directions of incident light. The films also show a memory effect, remaining unchanged in the transparent state or in the opaque state depending on the manner in which the field is turned-OFF. The memory effect in this type of films is more pronounced with respect to the liquid crystal devices (LCD's) which show bistable properties.

The PSLC composites and materials of the present invention overcome the limitations of the prior art and also show bistable properties that make them useful as an active matrix in information display applications. The concentration of the polymer is low (5-30%) but is enough to make homogeneous films that are not susceptible to mechanical stress as liquid crystal devices.

Applicant's innovation leads to a good working system that works without any surface treatment either in the normal mode or in the reverse mode, depending on the voltage applied to the system.

The polymer concentration in the PSLC composite of the invention is within the 5-30% range by weight. Although applicant does not want to be bound by theories regarding mechanisms of the invention, applicant believes that in the present invention a reverse morphology is obtained thereby giving to dispersions of a polymer discontinuous phase in a continuous liquid crystal matrix.

The liquid crystal materials which are usable in carrying out the present invention includes smetics, nematic, cholesteric, ferroelectrics, as well as organometallic mesogens.

Typical organic classes of liquid crystal forming materials contemplated comprise both aromatic and aliphatic organic compounds such as benzylideneanilines generally prepared from the reaction of parasubstituted benzaldehyde and parasubstituted aniline; N-(p-alkoxybenzylidene)-p-aminostyrenes prepared from the reaction of the appropriate aldehyde with p-aminostyrene; derivatives of beta sitosterol; active amyl ester of cyano benzylidene amino-cinnamate; p-phenylene containing compounds such as p-phenylene p-alkoxybenzoates; aminoacetophenones; aminopropiophenones; phenylenediamines; chlorophenylenediamines; terphthals; p,p'-disubstituted diphenylacetylenes; p,p'-disubstituted-1,4-diphenylbutadienes; p,p'-diisubstituted phenyl benzoates; substituted phenyl alkyl carbonates and diphenyl carbonates; p-n-alkyl benzoic acids; p-n-alkoxy benzoic acids; and Schiff bases prepared from p-substituted benzaldehydes and compounds of the following types: p-phenylenediamines, 4,4'-diaminobiphenyls, 4-phenylazoanilines, naphthylamines, and naphtylenediamines.

Specific liquid-crystal compounds include ethyl p-4-ethoxy-benzylidene-aminocinnamate: p,p'-azoxybenzoic acid diethyl ester: N-(p-methoxy-benzylidene)-p-aminostyrene; N-(p-butoxybenzylidene)-p-aminostyrene; p-azoxyanisole; p-hexyloxybenzalazine; p-azoxyphenetole; p-anisylidene-p-biphenylamine; p-ethoxy-benzylindene-p-biphenylamine; p-anisylidene-p-aminophenyl acetate; p-ethoxybenzylidene-p-aminophenyl acetate; p-n-hexyloxybenzylidene-p-aminophenyl acetate; p-n-hexoloxy-benzylidene-p-aminophenyl acetate; deca-2,4-dienoic acid; 4,4' di-n-heptoxyazoxybenzene; 4,4' di-n-pentoxyazoxybenzene; 4,4' di-n-butoxyazoxybenzene; 4,4'diethoxyazoxybenzene; undeca-2,4-dienoic acid; nona-2,4-dienoic acid; 4,4' dimethoxystilbene; 2,5-di(p-ethoxybenzylidene)cyclopentanone; 2, 7-di(benzylideneamino) fluorene; 2-p-methoxybenzylideneaminophenanthrene; 4-methoxy-4"-nitro-p-terphenyl; 4-p-methoxybenzylideneaminobiphenyl; 4,4'-di(benzylideneamino)biphenyl; p-n-hexylbenzoic acid; p-n--propoxybenzoic acid; trans-p-methoxycinamic acid; 6-methoxy-2-naphtholic acid; p-phenylene di-p-anisate; p-phenylene di-p-ethoxy-benzoate; p-phenylene di-p-n-hexyloxybenzoate; p-phenylene di-p-n-heptyloxybenzoate; p-phenylene di-p-n-octyloxybenzoate; 1,4-bicy-clo[2.2.2.]octylenedi-p-anisate; 1,4-bicyclo[2.2.2]octylene di-p-n-octyloxy-benzoate; trans-1,4-cyclohexylene di-p-n-butoxybenzoate; 4,4'-di(p-methoxybenzylideneamino)dibenzyl; p,p'-diacetoxystilbene; 1,2-di(p-methoxyphenyl)-acetylene; p-(p-acetoxyazo) benzoic acid; 1,4-di(p-methoxyphenyl)-butadiene; p-anisal-p-anisidine; p,p'dimethoxydibenzal-1,4-naphthalenediamine; p-n-butylbenzoic acid; p,p'-di-n-butyldiphenylpyridazine; p-(p-cyanobenzal) anisdine; p-(p-methoxybenzoxy benzoic acid, anisal-p-aminozobenzene; 1-(4'-anisalamino)-4-phenylazonaphthalene; N-(p-methoxy-benzylidene)-p-n-butylaniline; N-(p-n-octyloxybenzylidene)p-n-butylaniline; p-anisylidene-p-phenylazoaniline; N,N'-dibenzylidenebenzidine; N,N'-di(p-n-hexyloxybenzylidene) benzidine; p-bis(-heptyloxybenzoyloxy)benzene; p-n-propoxybenzoic acid; p-n-butoxybenzoic acid; p-n-amyloxybenzoic acid; p-n-hexyloxybenzoic acid; p-n-heptyloxybenzoic acid; p-n-octyloxybenzoic acid; butyl-p-(p-ethoxy-phenoxycarbonyl)phenylcarbonate; p-(p-ethoxy-phenylazo) phenylheptanoate; 4-[(p-hexyloxycarbonyloxybenzylidene)amino]-1-pentyloxybenzene; N-p-(pentyloxycarbonyloxy)benzylidene]-p-anisidine; p-[(p-butoxyphenyl)azo]phenyl butyl carbonate; p-(p-ethoxyphenylazo)phenyl hexanoate; p-(p-ethoxy-phenylazo)phenyl valerate; p [(p-ethoxybenzylidene)amino]benzonitrile; p-[(p-methoxybenzylidene)amono]benzonitrile; ethyl p-[(p-methoxybenzylidene)amino]cinnamate; p-(p-ethoxyphenylazo)-phenyl crotonate; p-[(p-methoxybenzylidene)amino]-phenyl p-toluate; p-[(p-ethoxybenzylidene)amino]-phenylbenzoate; p-[(p-ethoxy-benzylidene)amino]phenylbenzoate; N,N'-di(p-methoxybenzylidene)-α, α'-biptoluidine; p-anisalazine; 4-acetoxy-3-methoxycinnamic acid; p-acetoxycinnamic acid; 4'-[(p-pentyloxycarbonyloxybenzylidene)amino-valerophenone diethyl p,p'-azoxydicinnammate; 4-butoxybenzylidene-4'-aminoacetophenone; 4-decyloxybenzylidene-4'-aminoacetophenone; 4-dodecyloxybenzylidene-4'-aminoacetophenone; 4-heptyloxybenzylidene-4'aminoacetophenone; 4-hexyloxybenzylidene-4'-aminoacetophenone; 4-methoxybenzylidene-4'-aminoacetophenone; 44-nonyloxybenzylidene-4'-aminoacetophenone; 4-octyloxybenzlidene-4'-aminoacetophenone; 4-pentyloxybenzylidene-4'-aminoacetophenone; 4-propoxybenzylidine-4'-aminoacetophenone; 4-butoxybenzylidene-4'-aminopropiophenone; 4-hep-tyloxybenxylidene-4'-aminopropiophenone; 4-hexyloxybenzylidene-4'-aminopropiophenone; 4-methoxybenzylidene-4"-aminopropiophenone; 4-nonyloxybenzylidene-4'-aminopropiophenone; 4-octyloxybenzylidene-4'-aminopropiophenone; 4-pentyloxybenzyidene-4'-aminopropiophenone; 4-propoxybenzylidene-4'aminopropiophenone; bis-(4-bromobenzylidene)-2-chloro-1,4-phenylenediamine; bis-(4-chlorobenzylidene)-2-chloro-1,4-phenylenediamine; bis(4-n-decyloxybenzylidene)2-chloro-1,4-phenylenediamine; bis-(4-n-dodecyloxybenzylidene)-2-chloro-1,4-phenylenediamine; bis(4-n-hexyloxybenzylidene)2-chloro-1,4-phenylenediamine; bis-(4-me-thoxybenzylidene)2-chloro-1,4-phenylenediamine; bis(4-nonyloxybenzylidene)2-chloro-1,4-phenylenediamine; bis(4-n-octyloxybenzylidene)-2-chloro-1,4-phenylenediamine; bis(4-n-pentyloxybenzylidene)-2-chloro-1,4-phenylenediamine; bis(4-bromobenzylidene)-1,4-phenylenediamine; bis(4-chlorobenzylidene)-1,4-phenylenediamine, bis-(4-n-decyloxybenzylidene)-1,4-phenylenediamine; bis-(4-n-dodecyloxybenzlidene)-1,4-phenylenediamine; bis-(4-fluorobenzylidene)-1,4-phenylenediamine; bis-(4-n-heptyloxybenzylidene)-1,4-phenylenediamine; bis-(4-n-hexyloxybenzylidene)-1,4-phenylenediamine; bis-(4-n-nonyloxybenzylidene)-1,4-phenylenediamine; bis-(4-n-hexyloxybenzylidene)-1,4-phenylenediamine; bis-(4-n-nonloxybenzlidene)-1,4-phenylenediamine; bis-(4-n-octyloxybenzylidene)-1,4-phenylenediamine; bis-(4-n-pentyloxybenzylidene)-1,4-phenylenediamine; terephthal-bis-(p-bromoaniline); terephthal-bis-(p-chloroaniline); terephthal-bis-(p-fluoroaniline); terephthal-bis-(p-iodoaniline), and the like.

Nematic liquid crystalline materials suitable for use with the organometallic liquid crystals include: p-azoxyanisole, p-azoxyphenetole, p-butoxybenzoic acid, p-methoxy-cinnamic acid, butyl-p-anisylidene-p-aminocinnamate, anisylidene p-amino-phenylacetate, p-ethoxy-benzalamino-or-methyl-cinnamic acid, 1,4-bis(p-ethoxybenzylidene) cyclohexanone, 4,4'-dihexyloxybenzene, 4,4'-diheptyloxybenzene), anisal-p-amino-azo-benzene, anisaldazine, α-benzene-azo-(anisal-α'-naphthylamine), n, n'-nonoxybenzetoluidine; anilines of the generic group (p-n-alkoxybenzylidene-p-n-alkylanilines), such as p-methoxybenzylidene p'-n-butylaniline, p-n-butoxybenzylidene-p'-aminophenylacetate, p-n-octo-xybenzylidene-p'-aminophenylacetate, p-n-benzylideneproprionate-p'-aminophenylmethoxide, p-n-anixylidene-p'-aminophenylbuterate, p-n-butoxybenzylididene-p'-aminophenylpentanoate and mixtures thereof. Conjugated cyano-organic compounds that are useful are 7, 7', 8, 8'-tetracyanoquinodimethane (TCNQ), (2,4,7,-trinitro-9-fluorenylidene)-malono-nitrile (TFM), p-[N-(p'-methoxybenzylidene)amino]-n-butylbenzene (MBBA), p-[N-(p'-ethoxybenzylidene)amino]amino]-butylbenzene (EBBA), p-[N-(p'-methoxybenzylidene)amino]phenyl butyrate n-butyl-p-(p'-ethoxyphenoxycarbonyl)phenylcarbonate, p-methoxy-p'-n-butylazoxy-benzene, p-ethoxy-p'-n'-butylazobenzene, p-[N-(p'-methoxybenzylidene)amino]benzonitrile (BBCA), p-[N-(p'-methoxybenzylidene)amino]benzonitrile (BBCA), p-[N-(p'-hexylbenzylidene)amino]benzonitrile (HBCA), pentylphenylmethoxy benzoate, pentylphenylpentyloxy benzoate, cyanophenylpentyl benzoate, cyanophenylheptyloxy benzoate, cyanophenyloctyloxy benzoate, cyanophenylmethoxy benzoate, and the like.

Desirable nematic liquid crystals frequently comprise cyanobiphenyls, and may be mixed with cyanoterphenyls and with various esters. There are commercially available nematic type liquid crystal mixtures, such as liquid crystal mixture E7 (Licrilite® BL001 from E. Merck, Darmstadt, Germany, or its subsidiaries such as EM Industries, Hawthorne, N.Y. and Merck Industrial Chemical, Poole, England) that is a mixture of (by weight), 51% 4'-n-pentyl-n-cyanobiphenyl (5CB), 21% 4'-n-heptyl-n-cyanobiphenyl (7CB), 16% 4'-n-octoxy-4-cyanobiphenyl, 12% and 4'-n-pentyl-4'-n-pentyl-4-cyanoterphenyl that has a crystal to nematic liquid crystal phase transition temperature of -10°C and a liquid crystal to isotropic phase transition temperature of 60.5°C. Illustrative of other such commercial liquid crystal mixtures are the following:

E-31 is a proprietary mixture of cyanobiphenyls and a non-cyano biphenyl ester available from E. Merck, *supra,* and having a crystal to nematic crystal phase transition temperature of -9°C and a liquid crystal to isotropic phase transition temperature of 61.5°C. E-44 is a proprietary mixture of cyanobiphenyls, a cyanoterphenyl and a non-cyano biphenyl ester available from E. Merck, *supra,* and having a crystal to nematic liquid crystal phase transition temperature of -60°C and a liquid crystal to isotropic phase transition temperature of 100°C. E63, from E. Merck, *supra,* is a liquid crystal mixture that is similar to the E7 with added cyclohexanes. It contains: signifcant amounts of the commonly known liquid crystal component 5CB, 7CB, lesser amounts of 5CT, lesser amounts of Benzonitrile, 4-(4 propyl-1-cyclohexen-1-yl), commonly known as PCH3, lesser amounts of 4-carbonitrile,4'(4-pentyl-1-cyclohexen-1-yl)-1,1'-biphenyl, commonly known as BCH5, and still lesser amounts of [1,1'-Biphenyl]-4-carboxylic acid, 4'heptyl-4'-cyano[1,1'-biphenyl]-4-yl ester, commonly known as DB71. K-12 is 4-cyano-4'-butylbiphenyl and has a crystal to nematic liquid crystal phase transition temperature of 48°C. K-18 is 4-cyano-4'-hexylbiphenyl and has a crystal to nematic liquid crystal phase transition temperature of 14.5°C and a liquid crystal to isotropic phase transition temperature of 29°C. K-21 is 4-cyano-4'-heptylbiphenyl and has a crystal to nematic liquid crystal phase transition temperature of 30°C. K-24 is 4-cyano-4'-octylbiphenyl and has a crystal to smectic A liquid crystal phase transition temperature of 21.5°C., a smectic C to nematic liquid crystal phase transition temperature of 33.5°C. and a nematic liquid crystal to isotropic phase transition temperature of 40.5°C. M-15 is 4-cyano-4'-pentoxybiphenyl and has a crystal to nematic liquid crystal phase transition temperature of 48°C. and a liquid crystal to isotropic phase transition temperature of 68°C. M-18 is 4-cyano-4'-hexoxybiphenyl and has a crystal to nematic liquid crystal phase transition temperature of 57°C. and a liquid crystal to isotropic phase transition temperature of 75.5°C. M-24 is 4-cyano-4'-octoxybiphenyl and has a crystal to smectic A liquid crystal phase transition temperature of 54.5°C., a smectic A to nematic liquid crystal phase transition temperature of 54.5°C., a smectic A to nematic liquid crystal phase transition temperature of 67.0°C. and a nematic to isotropic phase transition temperature of 80.0°C. Other desirable Licrilite® liquid crystal mixtures include BL003, BL004, BL009, BL011,BL012, BL032, BL036, BL037, BL045, BL046, ML-1001, ML-1002, as well as TL202, TL203, TL204 and TL205, all obtainable from E. Merck, *supra.*

TOTN404, available from Hoffman-LaRoche, Basel, Switzerland and Nutley, N.J., is a liquid crystal mixture similar to E7 but with added pyrimidines. It contains approximately 30 weight percent of 4-carbonitrile,4'-pentyloxy-1,1'-biphenyl commonly known as 50CB, 14 weight percent of 4-carbonitrile,4'octyloxy-1,1'-Biphenyl, commonly known as 80CB, 10 weight percent of 4-carbonitrile-4"-pentyl-1,1',4',1"-terphenyl, commonly known as 5CT, 10 weight percent of 4-(4-pentyl-2-pyrimidimyl)-benzonitrile, commonly known as RO-CP-7035, 20 weight percent of 4-(4-heptyl-2-pyrimidimyl)-benzonitrile, commonly known as RO-CP-7037, and 15 weight percent of 4-[5-(4-butylphenyl)-2-pyrimiedinyl]benzonitrile, commonly known as RO-CM-7334.

ROTN-570, available from Hoffman-LaRoche is a cyanobiphenyl liquid crystal mixture comprises 51 weight percent of 4-cyano-4'-pentylbiphenyl, 25 weight percent of 4-cyano-4'-heptylbiphenyl, 16 weight percent of 4-cyano-4'-octyloxybiphenyl, and 8 weight percent of 4-cyano-4'-pentyl-p-terphenyl. Another desirable liquid crystal mixture from Hoffman-LaRoche is TNO623.

To prepare, for example a shutter device containing the composite of the present invention, conducting glass substrates (i.e, glass coated with indium-tin oxide ) are used. Glass or polystyrene spacers are used to control film thickness. For example, a microspacer of 10 microns may be used. The spacers are sprinkled over one substrate prior to pouring onto it the polymer dispersed liquid crystal formulation. The electrooptical cells are drop filled with an excess of the polymer dispersed liquid crystal formulation being poured on the glass substrate and a second glass substrate is added, and pressing until it contacts the spacers. For small shutters (1 in²), manual pressing may be used to place the top substrate. Contact of the glass spacers can be easily felt. A vacuum press should be used for larger polymer dispersed liquid crystal films. In each instant, the samples are cured with no external pressure. The polymer dispersed liquid crystal shutter is cured in a convection oven or set to the appropriate temperature or by UV at the appropriate temperature. For example, the polymer dispersed liquid crystal shutter is placed on a thick (>1/4 inch) aluminum sheet covered with aluminum foil. Adhesive tape is used to hold the shutters in position during cure. The droplet size of the polymer dispersed liquid crystals depends on the cure temperature. Generally, cure temperatures of approximately 60-120°C are used.

It is important that the samples be left in long enough for droplet formation and growth and polymer gelation. A curing time prior to phase separation of 30-60 minutes is typical. In general, the samples cannot be over-cured.

The samples may additionally be post-cured. Post-curing is the practice of a second curing step in ovens under similar conditions to the original cure, but typically for a longer period of time. As illustrated in the examples that follow, post-curing can improve the performance of PDLC composites with respect to certain properties.

Once the polymer dispersed liquid crystal has cured, the samples are cleaned. Excess material is removed with a razor blade and the surfaces can be cleaned with cloth and acetone.

As described above, the invention involves the inclusion of a chiral anisotropic thermosetting LCER in the polymer continuous phase matrix of a polymer dispersed liquid crystal composite. The LCER may comprise 100% of the epoxy resin utilized to make the composite or the LCER may be used in conjunction with other, non-mesogenic epoxy resins.

In the composites of the present invention, the polymer continuous phase matrix is anisotropic with respect to the transmission of light. Whether the polymer matrix is isotropic or anisotropic depends on the concentration of the LCER in the matrix and on other conditions such as cure temperature, and the curing agent used.

The invention contemplates the substitution of LCERs for conventional isotropic epoxy resins in polymer dispersed liquid crystal composites, as well as the substitution of a specially selected chiral curing agents in conjunction with the LCER in certain embodiments. The special chiral curing agent is selected to produce an ordered thermoset and to promote the appearance of a mesophase in the matrix where the LCER is present above a critical concentration, as illustrated in the examples below.

The invention further contemplates an electrooptical device containing a composite of the present invention. The devices of the invention encompass a thermally, electrically, magnetically and/or electromagnetically addressable liquid crystal optical/display cell. For example, in the case of a liquid crystal electrooptical cell, it has a volume of the liquid crystal-polymeric composite of the invention between two closely spaced electrodes in which the liquid crystal discontinuous phase is responsive to an applied voltage between the electrodes, such that light transmittance through the liquid crystal material is selectable depending upon the resulting electric field strength, current flow, or change passed through the cell. The cells typically contain sealant layers, support layers of transparent, electrically conductive film having sufficient supporting strength to maintain the structural integrity of the cell; polarizer elements when desirable; and associated adhesives, and the like.

The electrooptical liquid crystal cells can be conveniently fabricated by a variety of techniques known in the art. The present invention is particularly well suited for the preparation of large pieces of the composite material, from which smaller pieces can be later cut and used in fabricating a cell. For example, the cell can consist of two transparent plastic sheet electrodes made conductive by means of an Indium- tin oxide (ITO) coating, separated by a melt of solution-formed microdispersion of liquid crystal composite-forming material, the preparation of which is described by P.S. Drzaie, "Polymer Dispersed Nematic Liquid Crystal For Large Area Displays and Light Valves", J. Appl. Phys. 60(6) Sept. 15, 1986. Alternately, one electrode of the electrooptical liquid crystal cells can result from a conductive coating, such as tin oxide, applied to a glass pane. This conducting glass pane can be a conductive plastic sheet to complete the cell.

The device of the invention with LCERs in the polymer continuous phase will contain a microdispersion of material, typically in the shape of liquid crystal microdroplets, will either scatter or transmit incident light depending on the relationship among the indices of refraction and dependent upon the microdroplets being of a size to scatter incident light, e.g., on the order of 0/1 to 10 microns. In the absence of an applied field the optic axes of the microdroplets have no preferred direction, and the incident light encounters a mismatch between the indices of refraction of the matrix and of the microdroplets. This results in light being scattered and the device appears opaque. With application of an electric field across the sheet of liquid crystalline-polymeric composite material, the optic axes aligns parallel to the field and normal to the surface of a sheet of the composite. Incident light detects no mismatch between the indices of refraction and is transmitted so that the device appears transparent.

The liquid crystal devices of the invention may or may not have an image memory. Images formed by contrasting opaque and clear areas are displayed on these devices by the constant application of a field to those areas desired to appear clear. Once the field is removed, the clear areas switch back to opaque in less than about 200 milliseconds, typically less than about 150 milliseconds and in a preferred embodiment, less than about 50 milliseconds. The liquid crystal-polymer composite of the invention can have optical memory in that light scattering devices that include the composite can be manipulated to display contrasting opaque and clear areas which are field independent. Memory is made possible by the selection of a liquid crystal which remains in the liquid crystalline state at temperatures above the softening temperature of the polymer. The liquid crystal is in the liquid crystalline state while the polymer is soft and as a result, the optic axes of the discontinuous phase microdroplets can be aligned by an external field. Maintaining the external field in the course of rehardening the polymer provides a composite in which the microdroplets exposed to the field remain aligned upon the field's removal. With an external field applied to the entire surface of the composite film during hardening of the resin results in a wholly transparent material; a patterned field as, for instance, an alphanumeric character, applied during hardening of the polymer will result in a material displaying a clear (transmitting) character in an opaque (scattering) field. The clear area or areas will remain so until the random alignment of the optic axes is restored by reheating the material and cooling it in the absence of a field.

In the examples to follow, all composites were prepared according to the PIPS method described above and PDLC films/shutters prepared between conducting glass substrates with microspacers of 10 microns as described above. The films were cured in ovens at temperatures ranging from 90-160°C and curing times were 30-60 minutes.

The electrooptical characteristics of the PDLC films were measured with a photometric system, and the transmittance-voltage, switching times and angular transmittance of the samples were measured as functions of time.

In order to make the present invention still better understood, some examples are reported below which are of a merely illustrative character, and no way are limitative of the invention.

Symbols used in the examples are as follows:
Op = percentage of transmittance at 0 Volts
T* = minimum transmittance
Ton = maximum transmittance
V* = voltage corresponding to T*
V90 = voltage corresponding to 90% of transmittance

### EXAMPLE 1

Using a vessel equipped with an agitator, a reflux condenser, an inert gas inlet and a charging port, there was charged 100 grams of DOMS. DOMS is the diglycidyl ether of a methyl stylbestrol having an epoxy equivalent of 169. The vessel was heated at 145°C. Through the gas inlet was introduced a nitrogen flow which was maintained throughout the resin preparation cycle. While under agitation, 33 grams of (+)-3-methyl adipic acid (96% purity, α = +7.2° at 21°C in methanol, available from Aldrich Chemical Co., Milwaukee, Wisconsin) was added and stirred until the epoxy resin was dissolved. Under continuous agitation, heat was maintained at 140°C for 10 minutes and subsequently 1 gram of glycidylmethacrylate was added. The temperature was then reduced to room temperature. The final product was an opaque viscous liquid having a wide range of isotropization temperature which depends on the degree of prepolymerization and centered at around 100°C. The results of the reacting monomers are reported in Fig. 1.

### EXAMPLE 2

An LCDP device was prepared by mixing the prepolymer as claimed in Example 1 (CAT) with a cholesteric liquid crystal (CLC) obtained mixing 5% of pure chiral component (CB15, available from E. Merck, Darmstadt, Germany) and a nematic liquid crystal (TN0623). Two samples were prepared with the following compositions:

### Sample 1:

CAT 10%
CLC 80%

### Sample 2:

CAT 20%
CLC 80%

Both the sample were analyzed prior and after the curing of CAT in an oven (160°C for 12 hours). The morphology was analyzed with an optical microscope (Fig1). The nematic isotropic transition temperatures and the electro-optical performances were measured.

### Morphology

The structures of the samples 1 and 2 have been reported prior and after curing of CAT. The pictures were recorded with an optical microscope. After curing, the sample show a typical network structure (Fig. 1).

### Nematic-isotropic transition temperatures

The nematic-isotropic transition temperatures (T_{n,i}) were measured with an optical microscopy equipped with a hot stage. The T_{n,i} of the samples 1 and 2 were measured prior and after curing. The results are reported in the following table:

| Sample No. | Tₙᵢ |
|---|---|
| 1 (prior curing) | 90.6 |
| 1 (after curing) | 94.0 |
| 2(prior curing) | 81.2 |
| 2 (after curing) | 91.9 |

The increase in temperature, after curing, is indicative of the curing process.

### Electro-optical properties

In the following table, the electro-optical properties of the samples 1 and 2 were reported:

| Samples | Op(%) | T*(%) | Ton(%) | V*(Volts) | V₉₀(Volts) |
|---|---|---|---|---|---|
| 1 | 72.47 | 32 | 87.2 | 16 | 30 |
| 2 | 71.5 | 8 | 71.5 | 22 | 50 |

wherein
Op = percentage of transmittance at 0 Volts
T* = minimum transmittance
Ton = maximum transmittance
V* = voltage corresponding to T*
V90 = voltage corresponding to 90% of transmittance

The electrooptical properties are illustrated in Figure 2 and the angular transmittance of both samples are illustrated in Figure 3.

While the invention has been described in connection with exemplary embodiments thereof, it will be understood that many modifications will be apparent to those of ordinary skill in the art and that this application is intended to cover any adaptations or variations thereof. Further modifications may be made without departing from the broad teachings of this invention, the scope of which is defined by the following claims.

## Claims

1. A chiral anisotropic thermosetting resin comprising the reaction product of a liquid crystalline epoxy prepolymer and a chiral curing agent.

2. The chiral anisotropic thermosetting resin of claim 1 wherein the liquid crystalline epoxy prepolymer is selected from the group consisting of 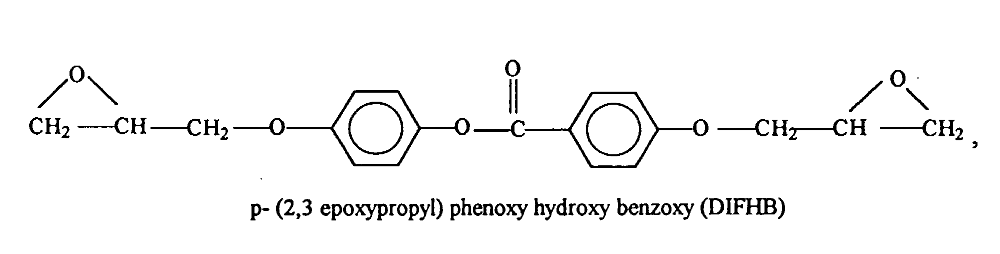 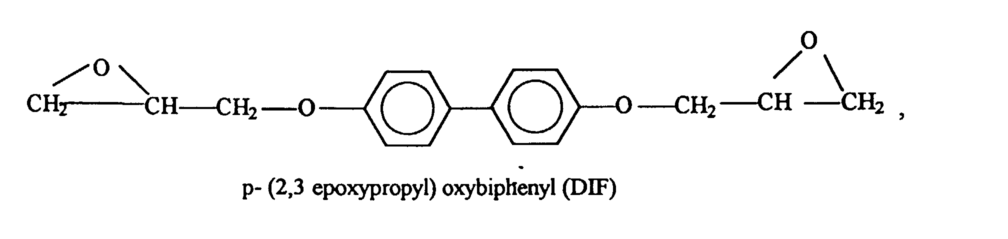 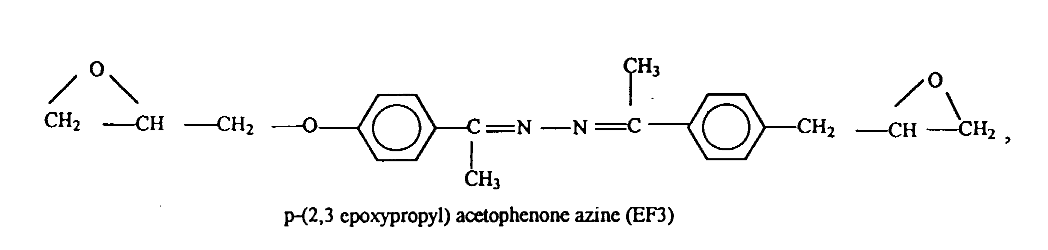 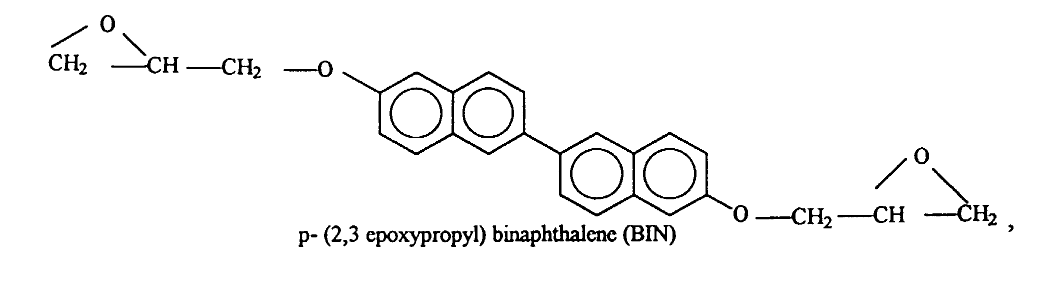 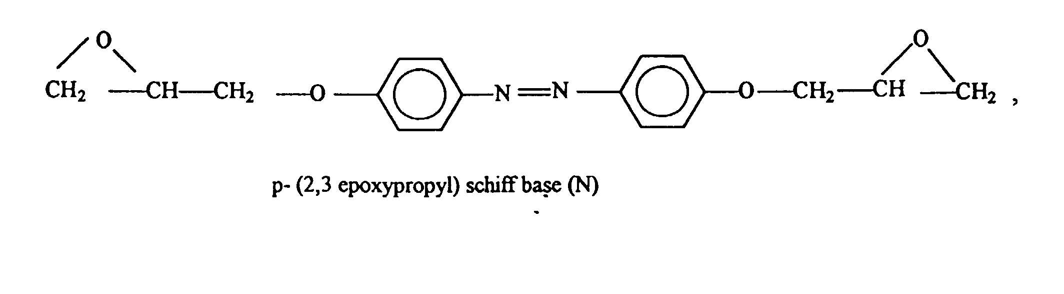 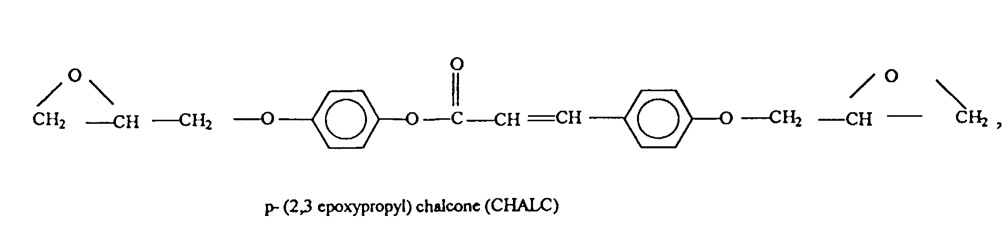 and

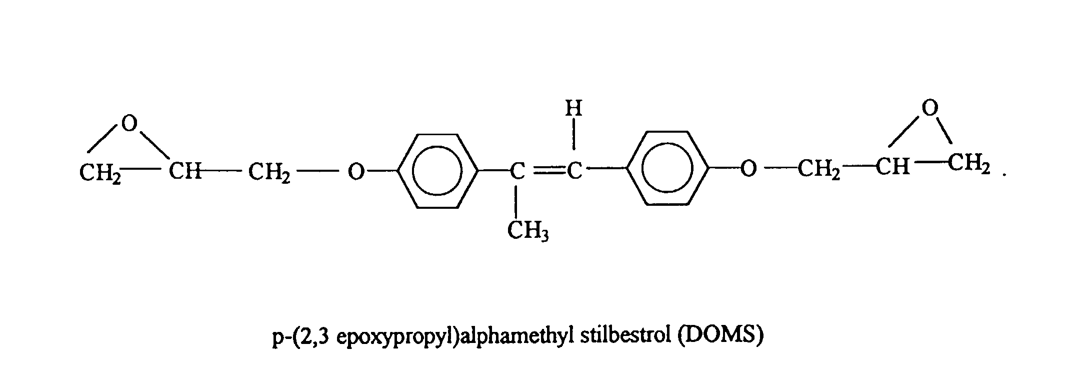

3. The chiral anisotropic thermosetting resin of claim 1 wherein the chiral curing agent is selected from the group consisting of chiral polyamines and chiral polycarboxylic acids.

4. The chiral anisotropic thermosetting resin of claim 3 wherein said chiral curing agent is a chiral polycarboxylic acid selected from the group consisting of 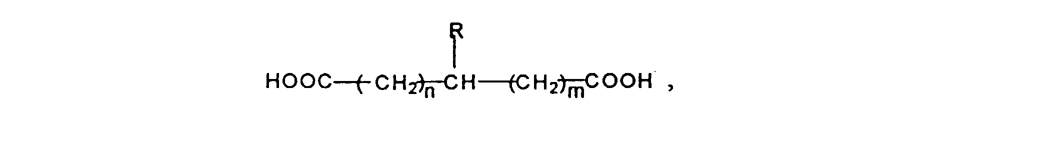 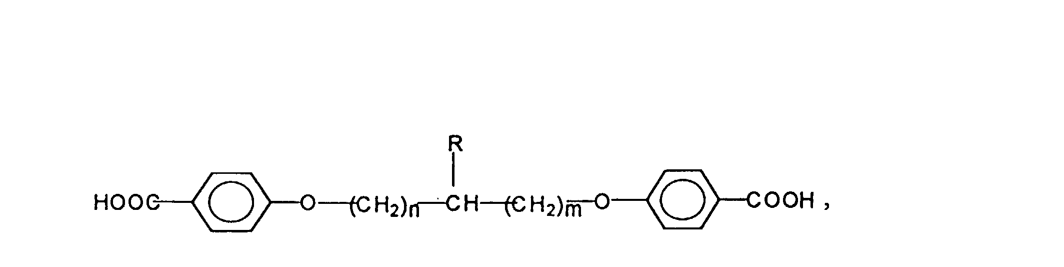 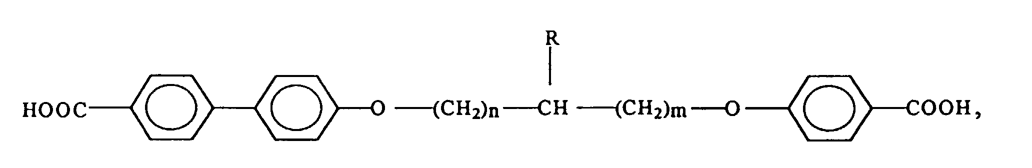 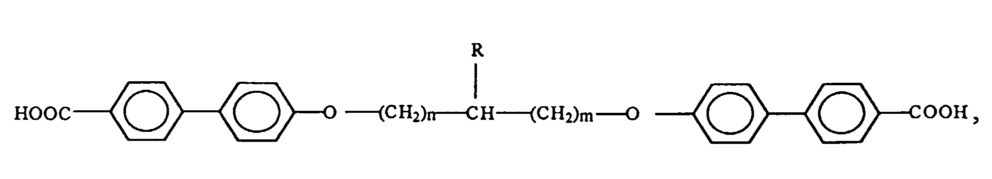 and 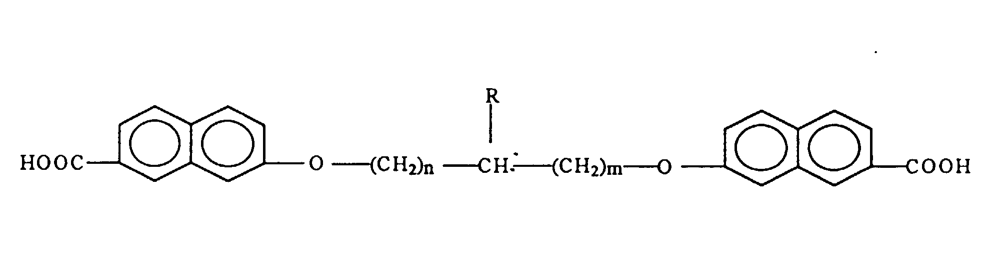 wherein R is selected from the group consisting of CH₃, C₂H₅, n-C₃H₇, i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n cannot be identical.

5. The chiral anisotropic resin of claim of claim 1 wherein said liquid crystalline epoxy prepolymer is 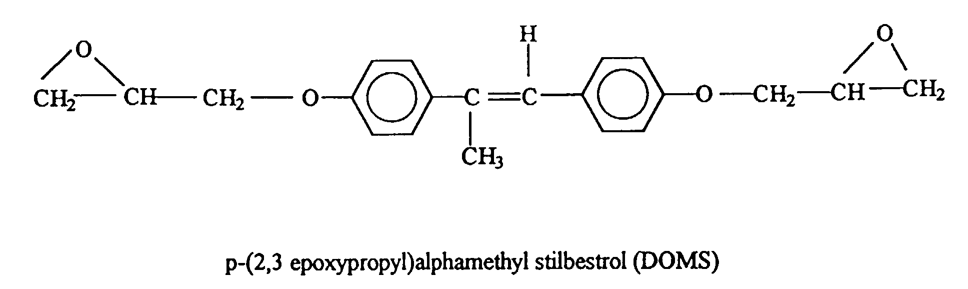 and the chiral curing agent is a polycarboxylic acid having the following structure 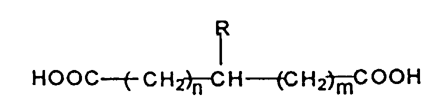 wherein R is selected from the group consisting of CH₃, C₂H₅, n-C₃H₇, i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n cannot be identical.

6. The chiral anisotropic resin of claim 5 wherein said chiral polycarboxylic acid is 3-methyl adipic acid.

7. The chiral anisotripic resin of claim 5 wherein said chiral polycarboxylic acid is 2-methyl adipic acid.

8. The chiral anisotropic resin of claim 1 wherein said liquid crystalline epoxy prepolymer has the formula: 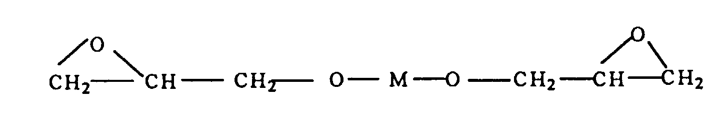 wherein M is a group containing two or more aromatic rings bridged by a rigid central linkage group and said central linkage group is selected from the group consisting of a direct bond, or a -CR₁=CR₁-, -C=C-, -N=N-, CR₁=N, -CR₁=N-N=CR₁- , -CR₁=CR₁-CO- , -O-CO-NR₁-CO- ,-N=CR₁-, -CO-O-CO-NR₁, -CO-CR₁=CR₁-, -CO-O-N=CR₁, CR₁=N-O-OC-, -CO-NR₁-NR₁-OC-, -CH =CH-O-OC- ,-CO-O-CH=CH-, -O-OC-CH=CH-, -CH=CH-CO-O-, CHR₁-CO-CH=CH-, -CH=CH-CO-O-CHR₁, -CHR₁-CO-O-CH=CH-, -CH=CH-O-CO-CHR₁-, -CO-S-,-S-OC-, -CH₂-CH₂-O-O-, -O-OC-CH₂-CH₂-, -C=C-C=C-,-CR₁=CR₁-CR₁=CR -, 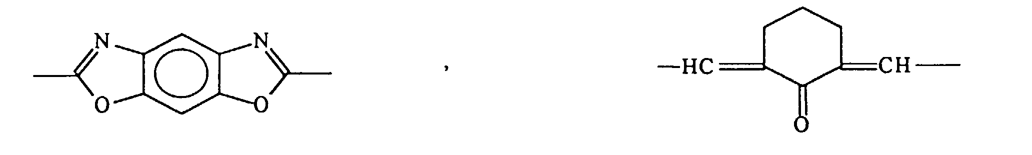 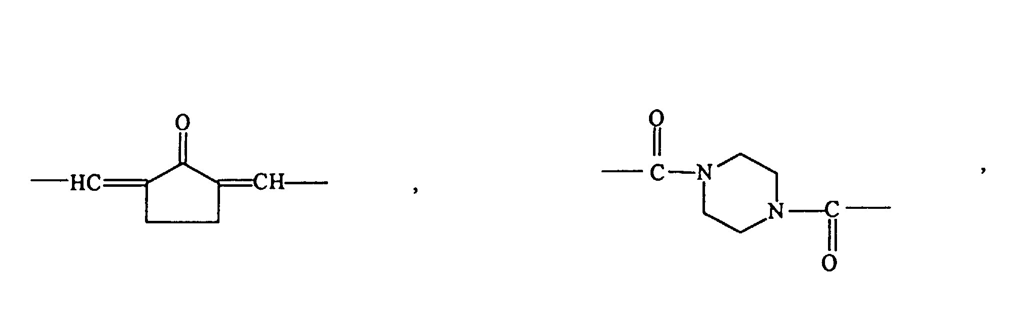 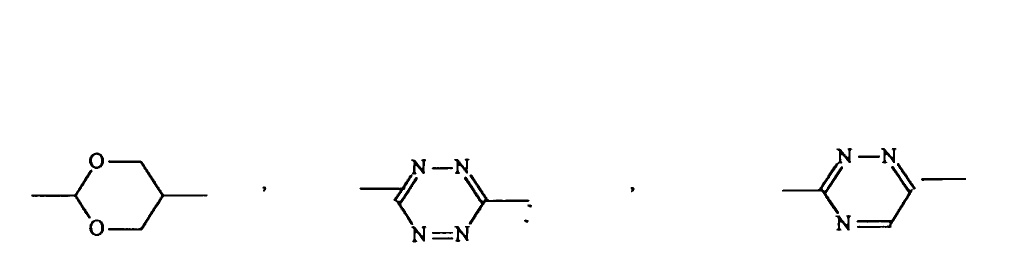 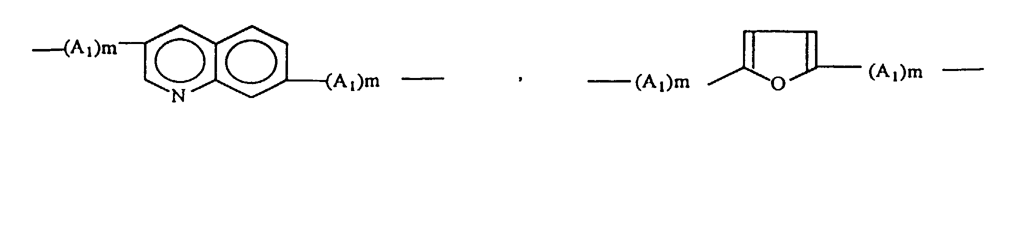 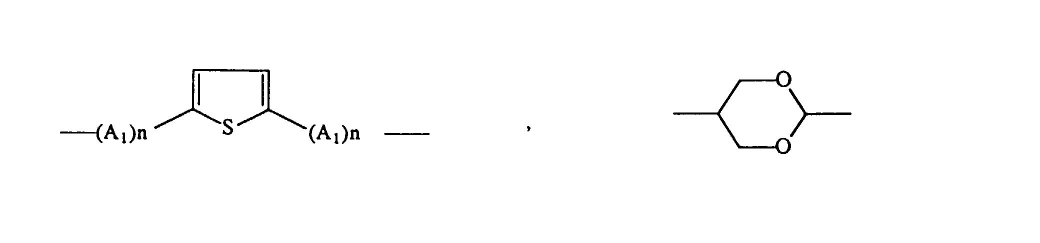 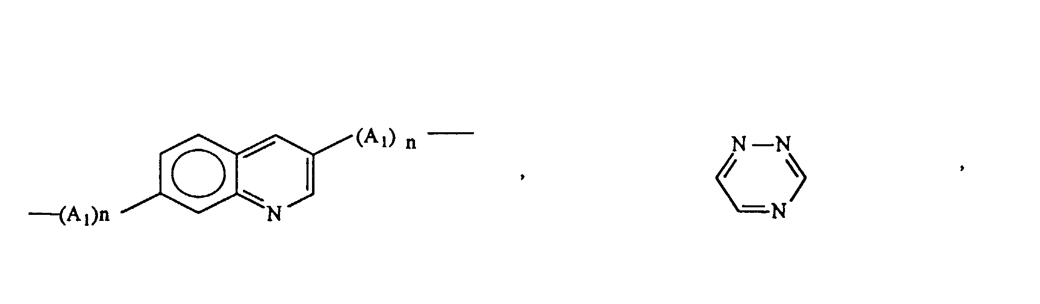 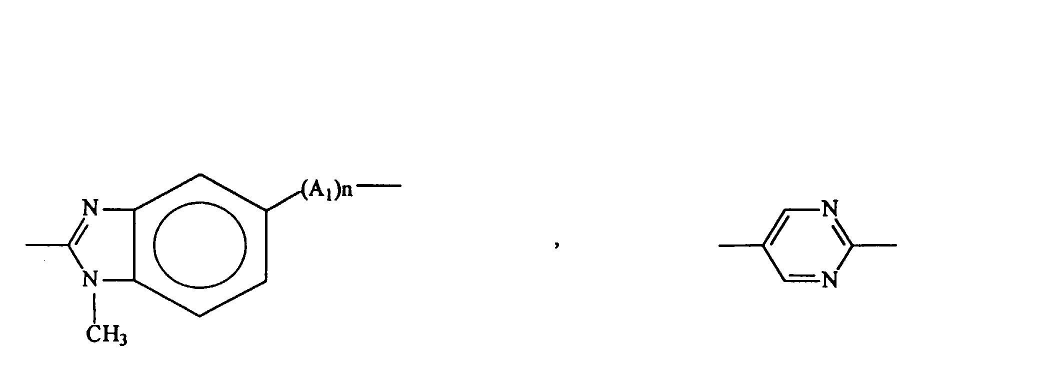 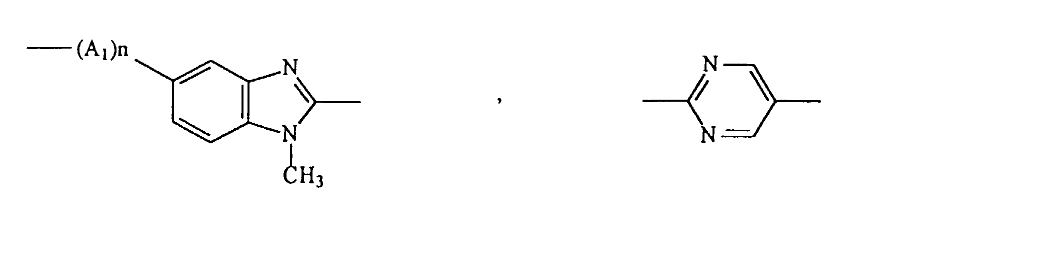 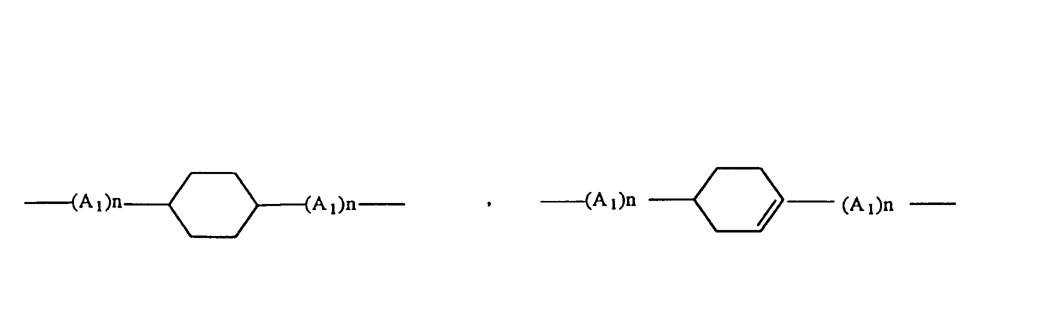 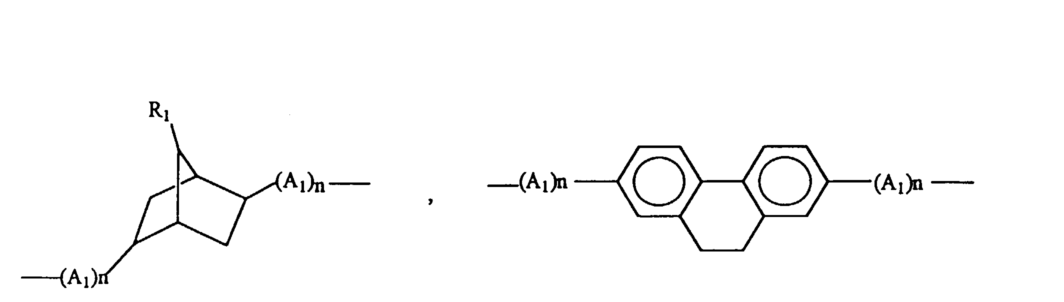 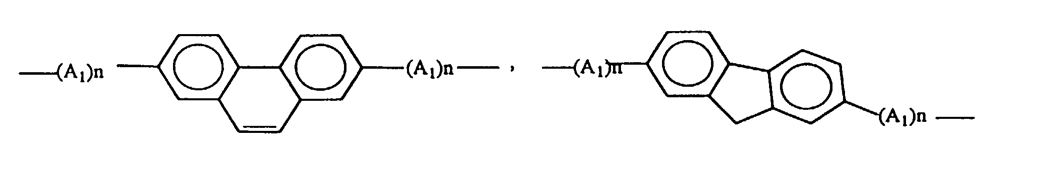 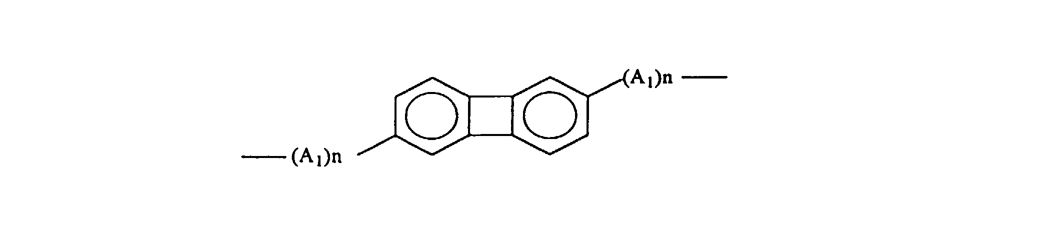 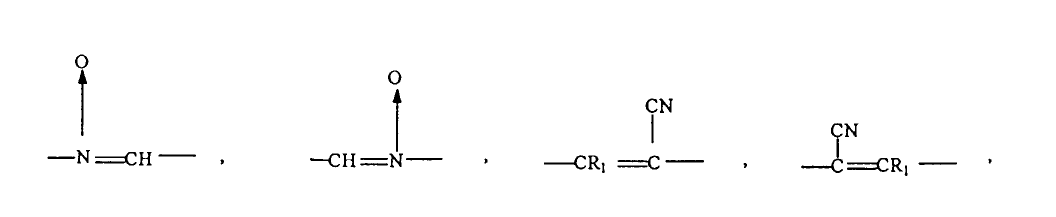 or 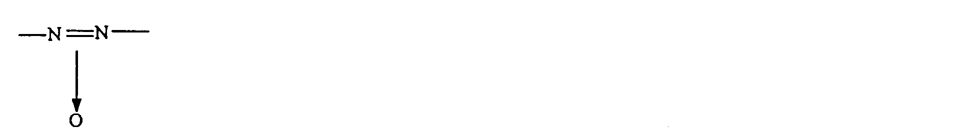 wherein each A₁ is independently a 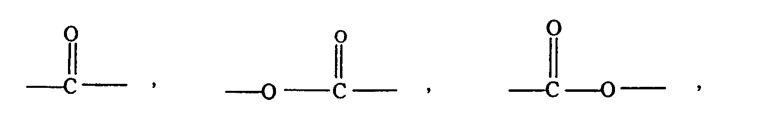 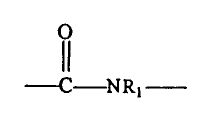 or 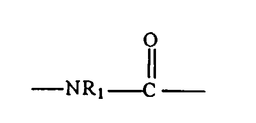 group; each R₁ is independently hydrogen or a hyrocarbyl group having 1-3 carbon atoms and the aromatic rings can also contain one or more heteroatoms selected from the group consisting of N, O, S.

9. The chiral anisotropic thermosetting resin of claim 8 wherein the chiral polycarboxylic acid is 3-methyl adipic acid.

10. A polymer dispersed liquid crystal composite comprising a polymer continuous phase and a liquid crystal discontinuous phase, wherein the polymer continuous phase comprises a chiral anisotropic thermosetting resin comprising the reaction product of a liquid crystalline epoxy prepolymer and a chiral curing agent.

11. The composite of claim 10 wherein said polymer continuous phase comprises 1 to 99% by weight based on the total weight of the composite.

12. The composite of claim 10 wherein said liquid crystal discontinuous phase comprises 99 to 1% by weight based on the total weight of the composite.

13. The composite of claim 10 wherein said chiral anisotropic thermosetting resin is the reaction product of a liquid crystalline epoxy resin prepolymer selected from the group consisting of 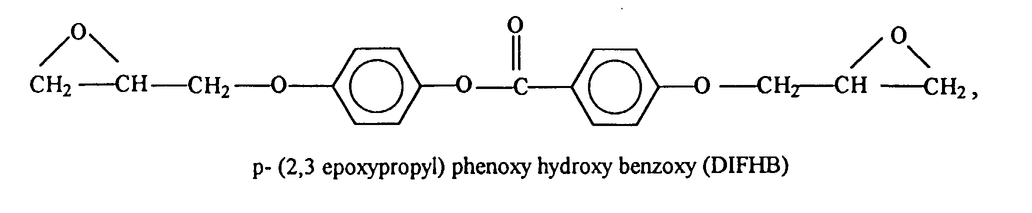 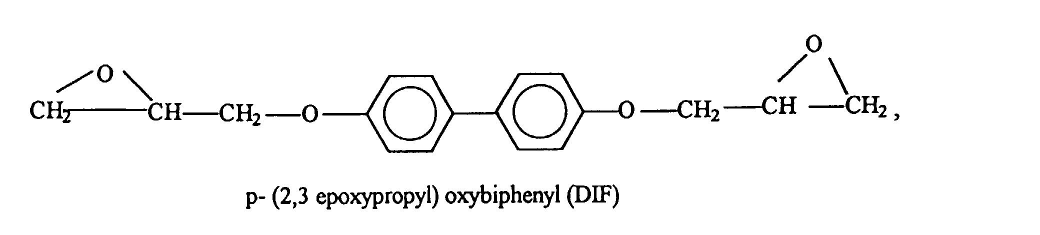 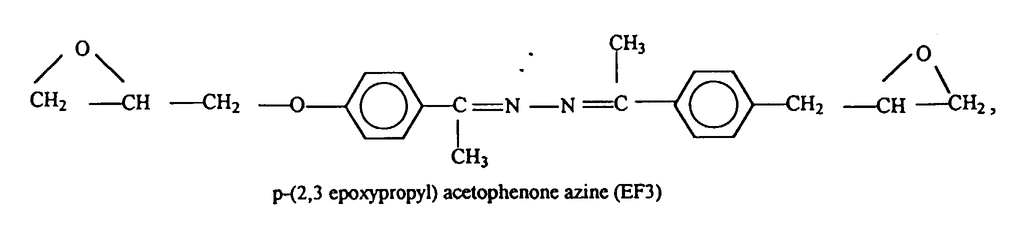 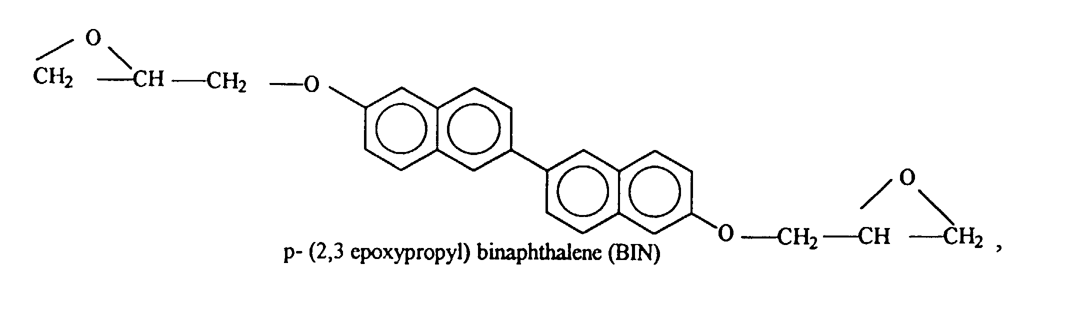 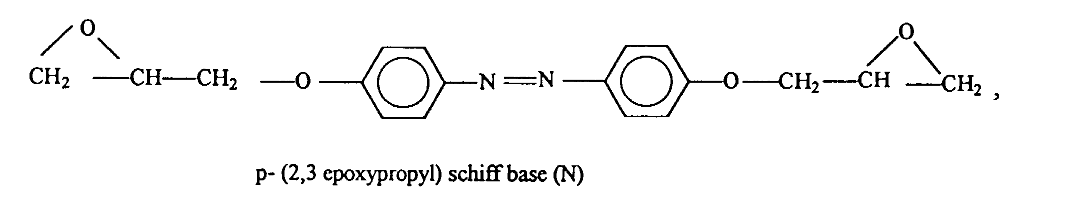 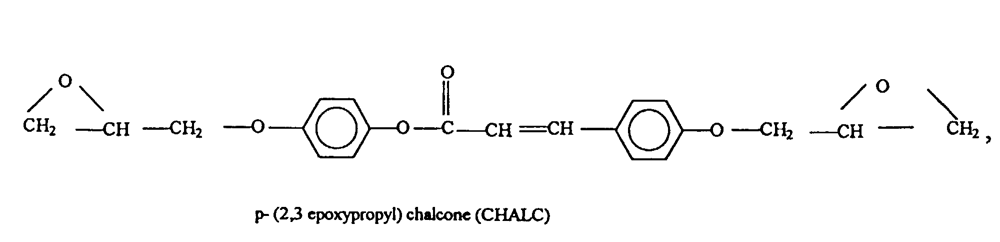 and 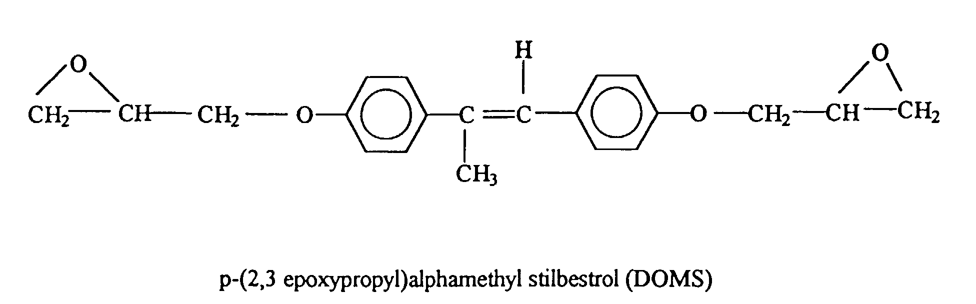 and a chiral polycarboxylic acid curing agent selected from the group consisting of 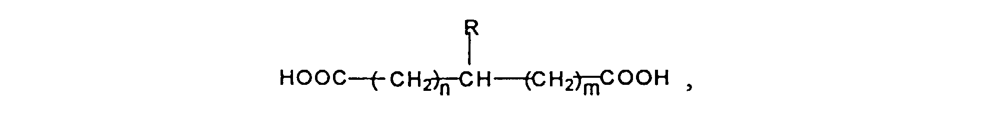 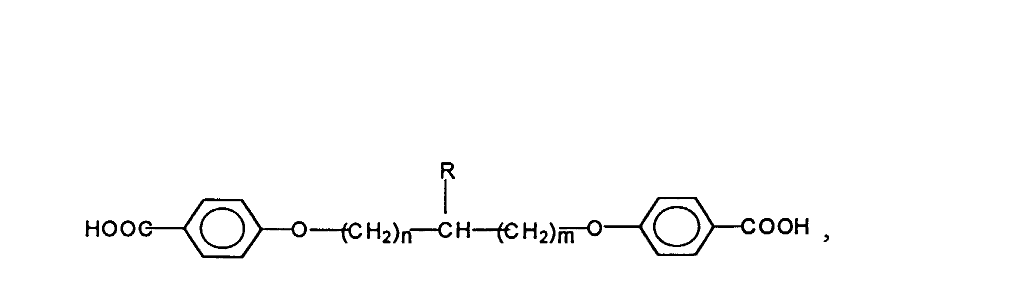 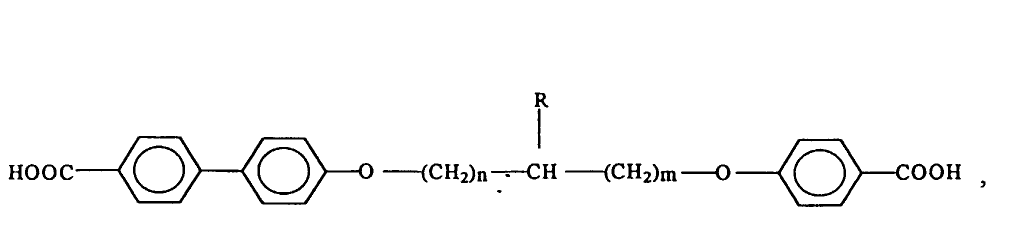 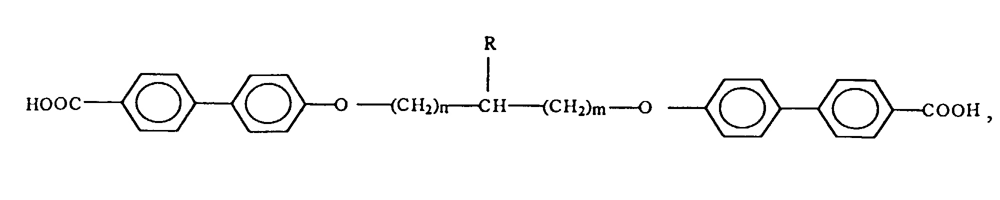 and 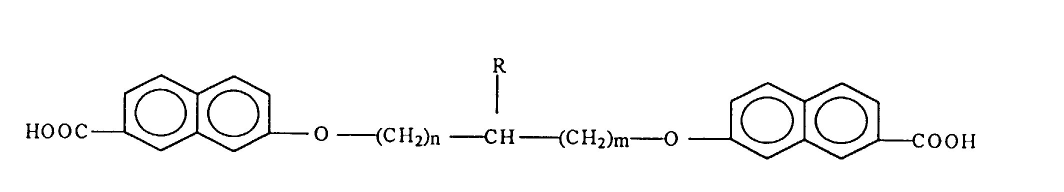 wherein R is selected from the group consisting of CH₃, C₂H_{5,} n-C₃H_{7,} i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n cannot be identical.

14. The composite of claim 13 wherein said chiral anisotropic thermosetting resin is the reaction product of a liquid crystalline epoxy resin prepolymer having the formula 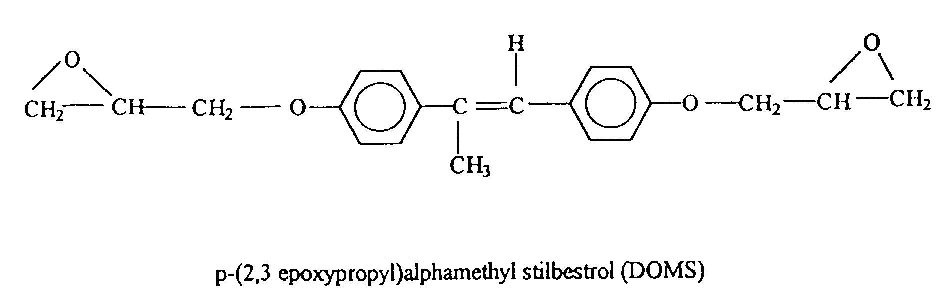 and a chiral polycarboxylic acid having the formula 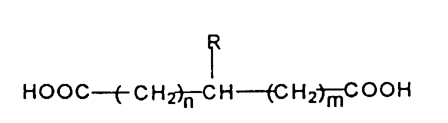 wherein R is selected from the group consisting of CH₃, C₂H₅, n-C₃H₇, i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n cannot be identical.

15. The composite of claim 14 wherein the chiral polycarboxylic acid is 3-methyl adipic acid.

16. The composite of claim 10 wherein said chiral anisotropic thermosetting resin is the reaction product of a liquid crystalline epoxy resin prepolymer of the formula 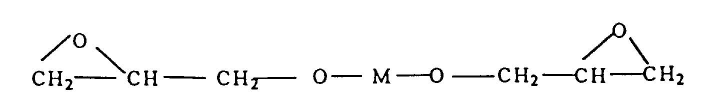 wherein M is a group containing two or more aromatic rings bridged by a rigid central linkage group and said central linkage group is selected from the group consisting of a direct bond, or a -CR₁=CR₁-, -C=C-, -N=N-, CR₁=N, -CR₁=N-N=CR₁-, -CR₁=CR₁-CO-, -O-CO-NR₁-CO-,-N=CR₁-, -CO-O-CO-NR₁, -CO-CR₁=CR₁-, -CO-O-N=CR₁, CR₁=N-O-OC-, -CO-NR₁-NR₁-OC-, -CH =CH-O-OC- ,-CO-O-CH=CH-, -O-OC-CH=CH-, -CH=CH-CO-O-, CHR₁O-CO-CH=CH-, -CH=CH-CO-O-CHR₁, -CHR₁-CO-O-CH=CH-, -CH=CH-O-CO-CHR₁-, -CO-S-,-S-OC-, -CH₂-CH₂-O-O-, -O-OC-CH₂-CH₂-, -C=C-C=C-,-CR₁=CR₁-CR₁=CR -, 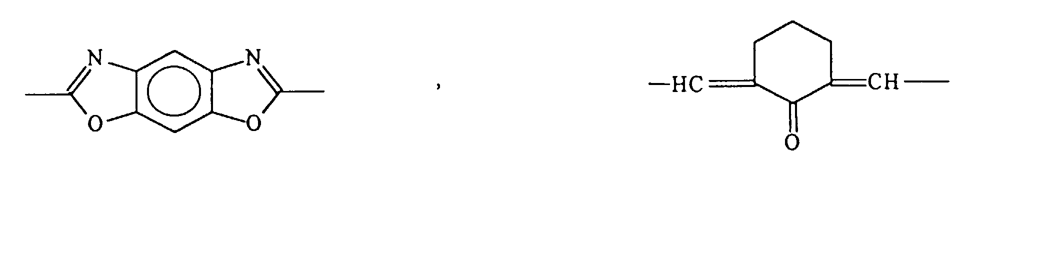 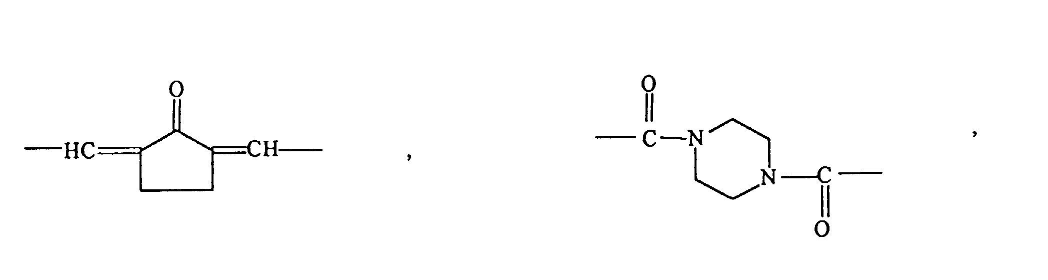 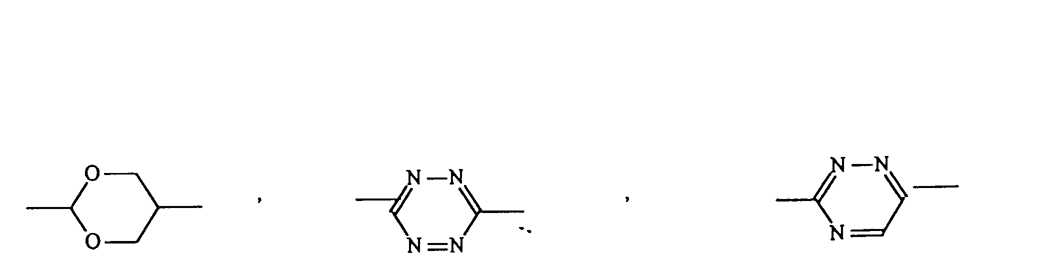 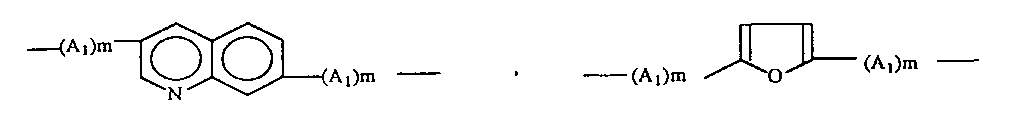 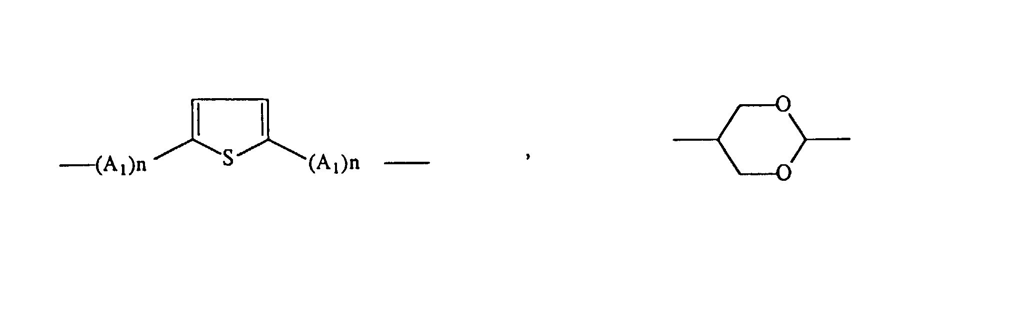 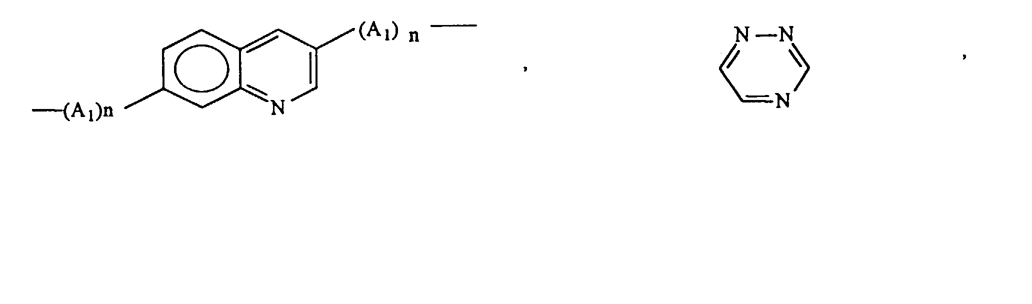 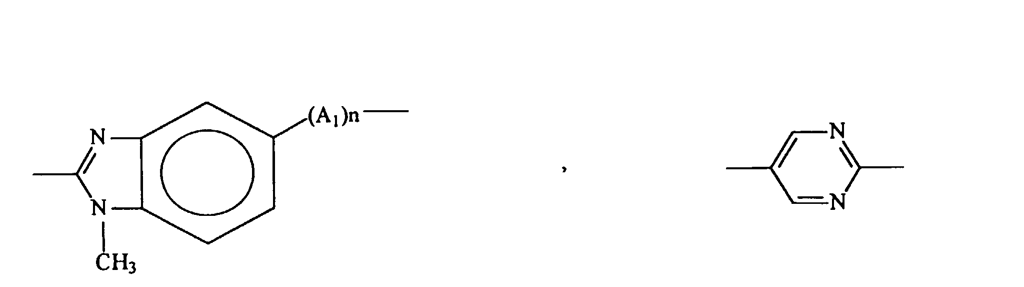 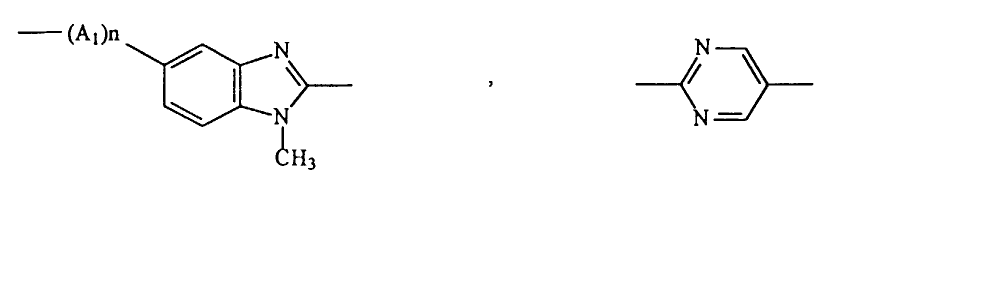 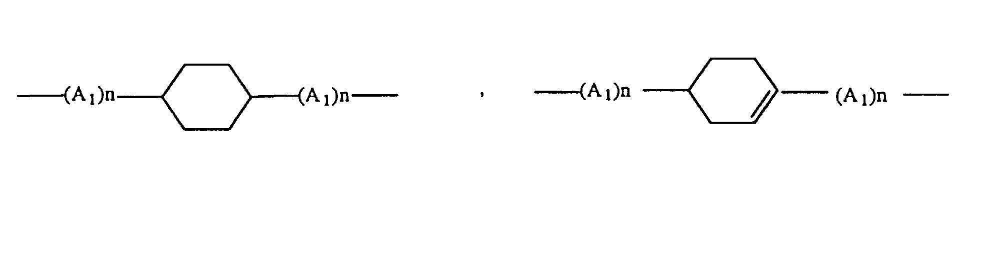 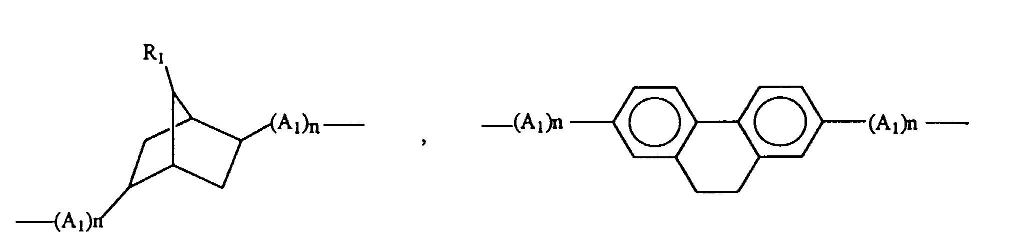 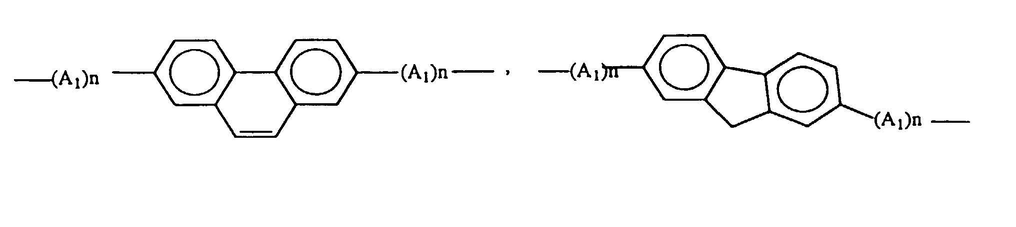 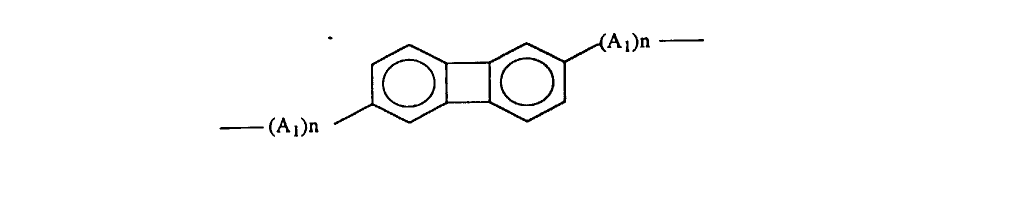 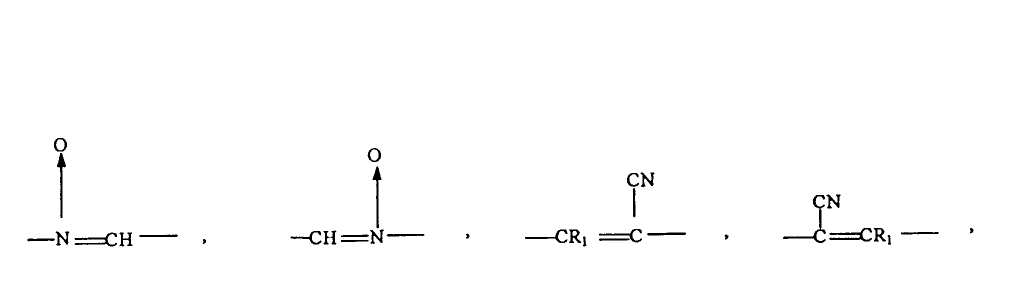 or 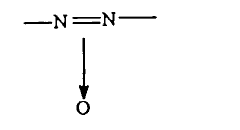 wherein each A₁ is independently a 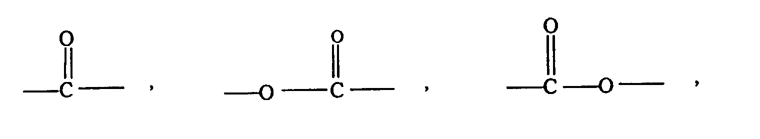 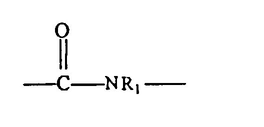 or 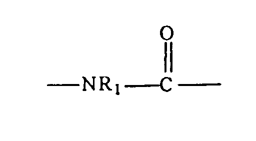 group ; each R₁ is independently hydrogen or a hydrocarbyl group having 1-3 carbon atoms and the aromatic rings can also contain one or more heteroatoms selected from the group consisting of N, O, S; and a chiral polycarboxylic acid curing agent selected from the group consisting of 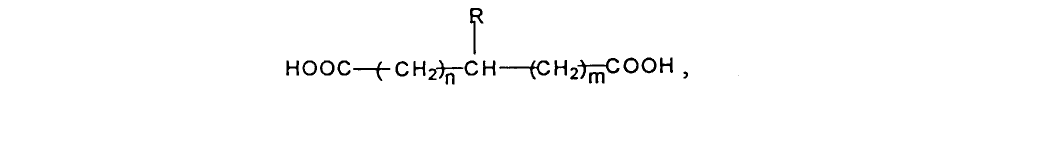 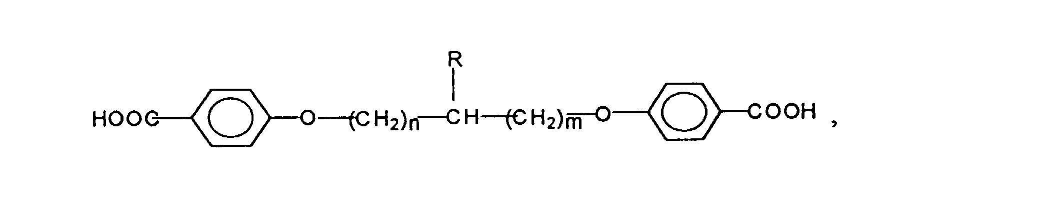 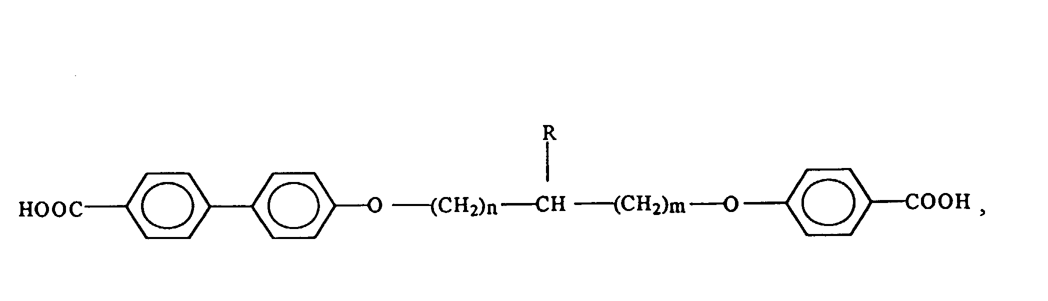 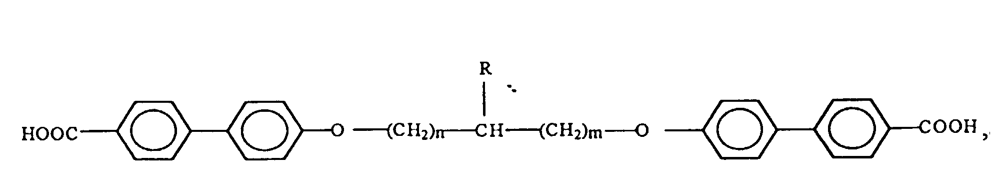 and 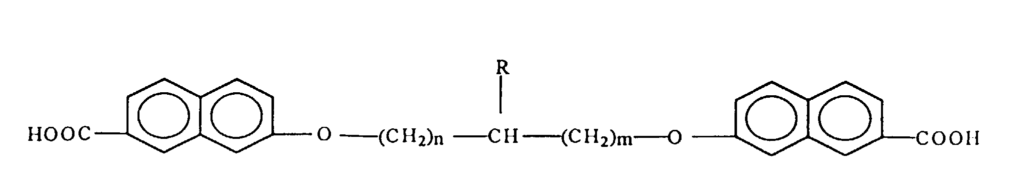 wherein R is selected from the group consisting of CH₃, C₂H₅, n-C₃H₇, i-C₃H₇, n-C₄H₉, s-C₄H₉, t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n cannot be identical.

17. The composite of claim 16 wherein the chiral polycarboxylic acid curing agent is 3-methyl adipic acid.

18. The polymer dispersed liquid crystal composite of claim 10 wherein the polymer continuous phase is anisotropic with respect to the transmission of light.

19. The polymer dispersed liquid crystal composite of claim 10 wherein said liquid crystal is selected from the group consisting of smectics, nematic, cholesteric, ferroelectrics and organometallic mesogens.

20. The polymer dispersed liquid crystal composite of claim 19 wherein said liquid crystal is a cholesteric liquid crystal.

21. A method of making a polymer dispersed liquid crystal composite comprising the steps of:
(i) preparing a mixture comprising (a) a liquid crystalline epoxy resin prepolymer containing a rigid rodlike moiety, (b) a low molecular weight liquid crystal material, and (c) a chiral curing agent, wherein (a), (b), and (c) are miscible; and
(ii) curing the mixture;
to form a polymer continuous phase wherein the liquid crystalline epoxy prepolymer containing the rigid rodlike moiety is a main chain constituent of the polymer continuous phase, and a liquid crystal discontinuous phase containing the low molecular weight liquid crystal material.

22. The method of claim 21 wherein the liquid crystalline epoxy prepolymer is selected from the group consisting of 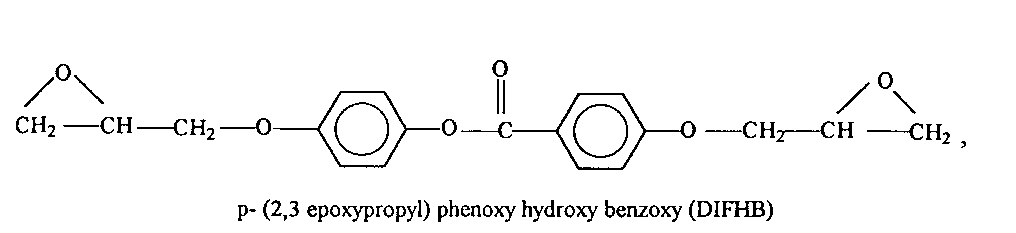 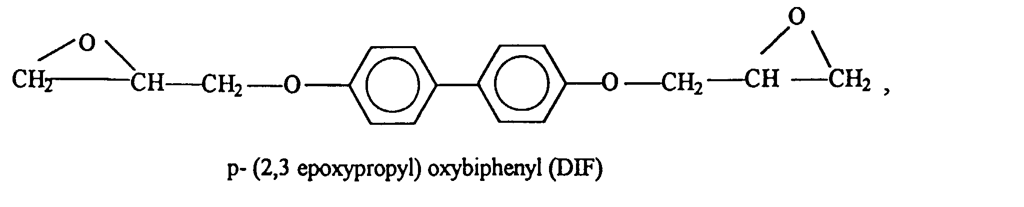 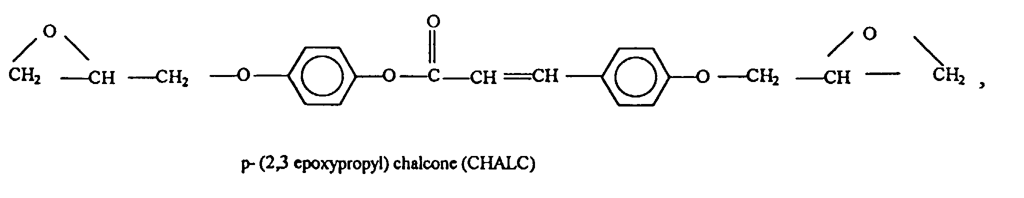 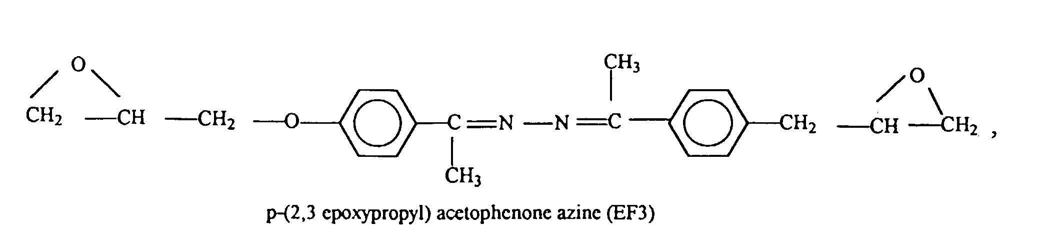 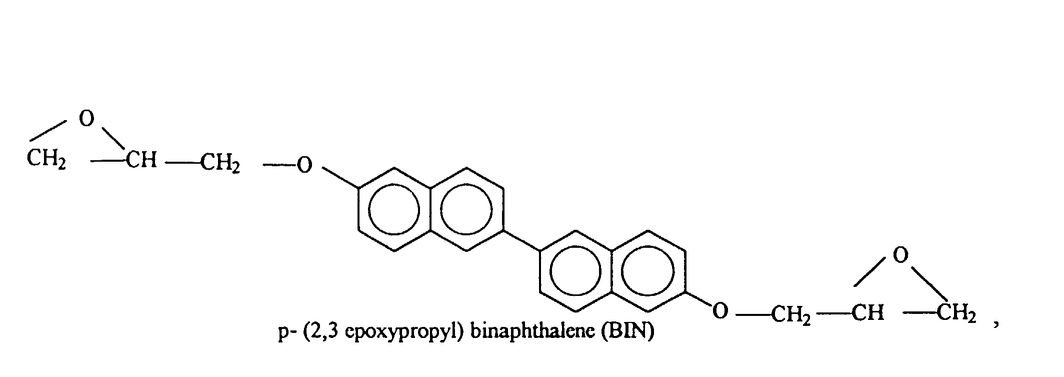 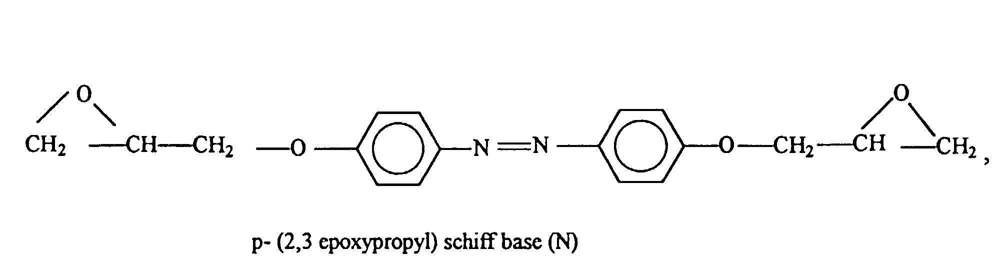 and 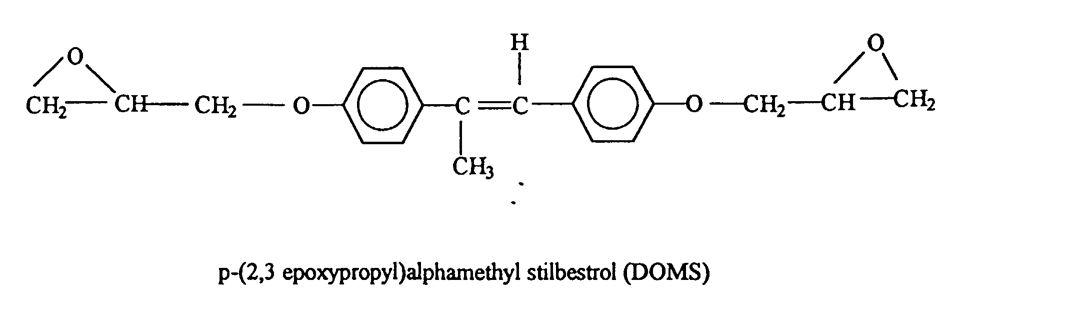 and the chiral polycarboxylic acid curing agent is selected from the group consisting of 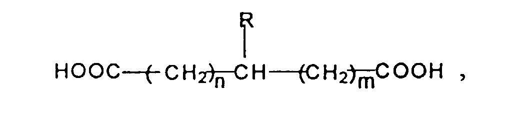 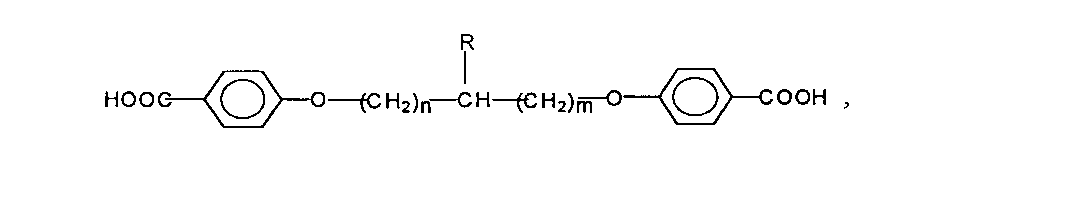 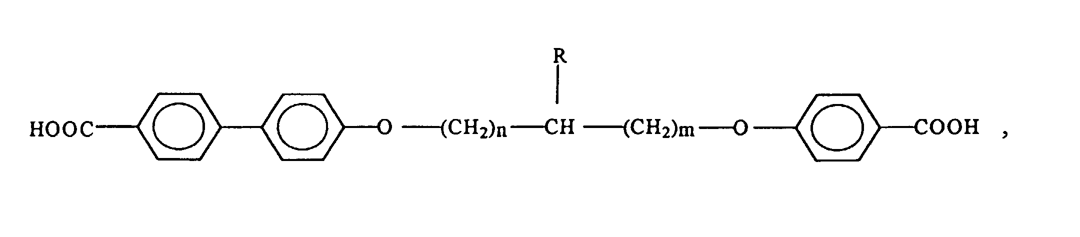 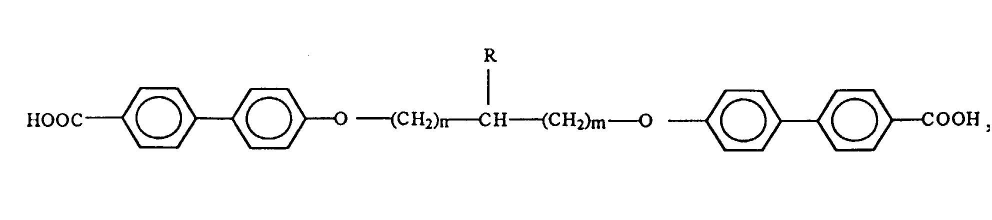 and 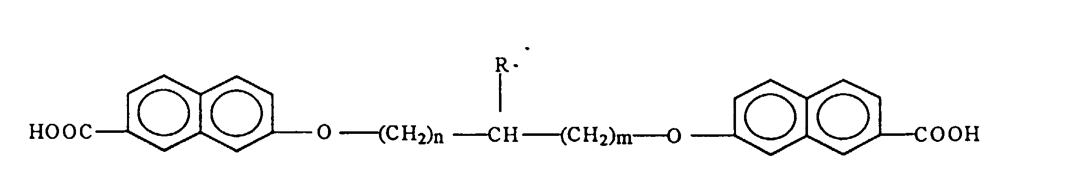 wherein R is selected from the group consisting of CH₃, C₂H₅, n-C₃H₇, i-C₃H₇, n-C₄H₉, s-C₄H_{9,} t-C₄H₉, phenyl and substituted phenyl, wherein the substituent in the phenyl group is selected from the group consisting of C₁-C₄ alkyl, halogen, carboxy, cyano, acyl and amino; n=1-5 and m=1-5, with the proviso that m and n cannot be identical.

23. The method of claim 22 wherein the liquid crystalline epoxy prepolymer is 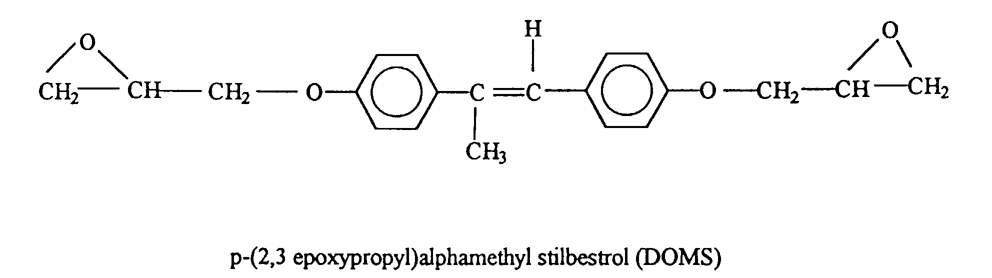 and the chiral polycarboxylic acid curing agent is a compound of the formula 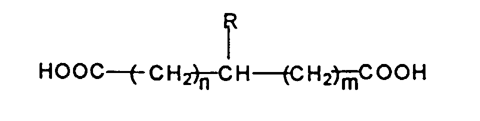 wherein R is selected from the group consisting of CH₃, C₂H₅, n-C₃H₇, i-C₃H₇, n-C₄H₉, s- C₄H₉, t-C₄H₉, phenyl and substituted phenyl, wherein the substituent in the phenyl group is selected from the group consisting of C₁-C₄ alkyl, halogen, carboxy, cyano, acyl and ammo; n=1-5 and m=1-5, with the proviso that m and n cannot be identical.

24. The method of claim 23 wherein the chiral polycarboxylic acid curing agent is 3-methyl adipic acid.

25. A haze-free polymer stabilized liquid crystal composite comprising 70 to 95% by weight of a liquid crystal continuous phase and 5 to 30% of a chiral anisotropic thermosetting polymer discontinuous phase, wherein said chiral anisotropic thermosetting polymer discontinous phase is the reaction product of a liquid crystalline epoxy prepolymer and a chiral polycarboxylic acid curing agent.

26. The haze-free composite of claim 25 wherein the composite is in the form of a film.
